# EUROPEAN PATENT APPLICATION

(11) **EP 4 738 873 A1**
(43) Date of publication of application: **06.05.2026**
(21) Application number: 24832073.1
(22) Date of filing: 28.06.2024
(51) Int. Cl.: H04N 25/773

(54) **PHOTOELECTRIC CONVERSION DEVICE AND PHOTOELECTRIC CONVERSION SYSTEM HAVING PHOTOELECTRIC CONVERSION DEVICE**

(30) Priority: 30.06.2023 JP 2023108682; 26.06.2024 JP 2024102829
(71) Applicant: Canon Kabushiki Kaisha, Tokyo, 146-8501 (JP)
(72) Inventor: MORIMOTO Kazuhiro, Tokyo 146-8501 (JP); SEKINE Hiroshi, Tokyo 146-8501 (JP); SASAGO Tomoya, Tokyo 146-8501 (JP)
(74) Representative: Canon Europe Limited
(86) International application number: PCT/JP2024/023452
(87) International publication number: WO 2025/005215

(57) **Abstract**

A photoelectric conversion device includes: a photoelectric conversion unit that generates a photon detection signal by using avalanche multiplication; a counter circuit that counts the photon detection signal output from the photoelectric conversion unit; a first period included in one frame; and a second period that is included in the one frame, that follows the first period, and that does not overlap with the first period. A count value based on one photon detection signal by the counter circuit in the first period is greater than a count value based on the one photon detection signal by the counter circuit in the second period.

## Description

### Technical Field

The present invention relates to a photoelectric conversion device and a photoelectric conversion system having the photoelectric conversion device.

### Background Art

Photoelectric conversion devices capable of detecting single-photon-level faint light using avalanche (electron avalanche) multiplication are known.

### Citation List

### Patent Literature

PTL 1: Japanese Patent Laid-Open No. 2023-039400

### Summary of Invention

### Technical Problem

In the invention described in PTL 1, exposure time is controlled on a per-pixel basis in such a manner that the quantity of incident light is calculated from information regarding a count value and exposure time. There arises a concern about image quality deterioration due to LED flicker occurrence in the configuration as described above. Solution to Problem

The present invention provides, as an aspect thereof, a photoelectric conversion unit, a first period, and a second period. The photoelectric conversion unit generates a photon detection signal by using avalanche multiplication. The counter circuit counts the photon detection signal output from the photoelectric conversion unit. The first period is included in one frame. The second period is included in the one frame, follows the first period, and does not overlap with the first period. A count value based on one photon detection signal by the counter circuit in the first period is greater than a count value based on the one photon detection signal by the counter circuit in the second period.

### Advantageous Effects of Invention

According to the present invention, the sensitivity of a photoelectric conversion device is controlled to appropriately count incident photons, and thereby image quality deterioration may be reduced.

### Brief Description of Drawings

[Fig. 1] Fig. 1 is a schematic chart of a photoelectric conversion device according to an embodiment.
[Fig. 2] Fig. 2 is a schematic chart of a PD substrate of the photoelectric conversion device according to the embodiment.
[Fig. 3] Fig. 3 is a schematic chart of a circuit board of the photoelectric conversion device according to the embodiment.
[Fig. 4] Fig. 4 is an example of a pixel circuit configuration of the photoelectric conversion device according to the embodiment.
[Fig. 5] Fig. 5 is a schematic chart illustrating the driving of a pixel circuit of the photoelectric conversion device according to the embodiment.
[Fig. 6] Fig. 6 is a chart for explaining the principle of the invention of the present application.
[Fig. 7] Fig. 7 is a block diagram of a pixel of the photoelectric conversion device according to a first embodiment.
[Fig. 8] Fig. 8 is a chart illustrating an example of a pixel circuit configuration of the photoelectric conversion device according to the first embodiment.
[Fig. 9] Fig. 9 is a timing chart of the photoelectric conversion device according to the first embodiment.
[Fig. 10] Fig. 10 is a chart illustrating an example of a pixel circuit configuration of a photoelectric conversion device according to a second embodiment.
[Fig. 11] Fig. 11 is a timing chart of the photoelectric conversion device according to the second embodiment.
[Fig. 12] Fig. 12 is a timing chart of the photoelectric conversion device according to the second embodiment.
[Fig. 13] Fig. 13 is a chart illustrating an example of a pixel circuit configuration of a photoelectric conversion device according to a third embodiment.
[Fig. 14] Fig. 14 is a timing chart of the photoelectric conversion device according to the third embodiment.
[Fig. 15] Fig. 15 is a chart illustrating an example of a pixel circuit configuration of the photoelectric conversion device according to a modification of the third embodiment.
[Fig. 16] Fig. 16 is a timing chart of the photoelectric conversion device according to the modification of the third embodiment.
[Fig. 17] Fig. 17 is a chart illustrating an example of a pixel circuit configuration of a photoelectric conversion device according to a modification of a fourth embodiment.
[Fig. 18] Fig. 18 is a timing chart of the photoelectric conversion device according to the modification of the fourth embodiment.
[Fig. 19] Fig. 19 is a chart illustrating an example of a pixel circuit configuration of a photoelectric conversion device according to a modification of a fifth embodiment.
[Fig. 20] Fig. 20 is a timing chart of the photoelectric conversion device according to the modification of the fifth embodiment.
[Fig. 21] Fig. 21 is a functional block diagram of a photoelectric conversion system according to a sixth embodiment.
[Fig. 22A] Fig. 22A is a schematic chart according to a seventh embodiment.
[Fig. 22B] Fig. 22B is a schematic chart according to the seventh embodiment.
[Fig. 23] Fig. 23 is a functional block diagram of a photoelectric conversion system according to an eighth embodiment.
[Fig. 24A] Fig. 24A is a functional block diagram of a photoelectric conversion system according to a ninth embodiment.
[Fig. 24B] Fig. 24B is a functional block diagram of the photoelectric conversion system according to the ninth embodiment.
[Fig. 25] Fig. 25 is a functional block diagram of a photoelectric conversion system according to a tenth embodiment.
[Fig. 26] Fig. 26 is a functional block diagram of a photoelectric conversion system according to an eleventh embodiment.
[Fig. 27A] Fig. 27A is a functional block diagram of a photoelectric conversion system according to a twelfth embodiment.
[Fig. 27B] Fig. 27B is a functional block diagram of the photoelectric conversion system according to the twelfth embodiment.

### Description of Embodiments

Forms described below are provided to embody the technical spirit of the present invention and do not limit the present invention. The sizes of members illustrated in the drawings and positional relationships therebetween are emphasized for clear explanation on occasions. The same components are denoted by the same numbers, and description thereof is omitted in some cases.

Hereinafter, embodiments of the present invention will be described in detail. In the following description, terms representing a specific direction and a specific location (for example, "up", "down", "right", "left", or another term including any of these terms) are used as necessary. The terms are used for easy understanding of the embodiment with reference to the drawings, and the meaning of each term does not limit the scope of the technical spirit of the present invention.

In this specification, a plan view corresponds to viewing the light incident surface of a semiconductor layer in a vertical direction, and a cross-sectional view denotes a view of a plane perpendicular to the light incident surface of the semiconductor layer. In a case where the light incident surface of the semiconductor layer is microscopically a rough surface, the plan view is defined with respect to the macroscopically viewed light incident surface of the semiconductor layer.

In the following description, the potential of the anode of an avalanche photodiode (APD) is fixed, and a signal is extracted from the cathode thereof. Accordingly, a first-conductivity-type semiconductor region where majority carriers are charges having the same polarity as that of signal charges is an n-type semiconductor region, and a second-conductivity-type semiconductor region where majority carriers are charges having a polarity different from that of signal charges is a p-type semiconductor region.

Even in a case where a signal is extracted from the anode of an APD with the cathode having a fixed potential, the present invention holds true. In this case, the first-conductivity-type semiconductor region where majority carriers are charges having the same polarity as that of signal charges is the p-type semiconductor region, and the second-conductivity-type semiconductor region where majority carriers are charges having a polarity different from that of signal charges is the n-type semiconductor region. The potential of one of the nodes of an APD is fixed in the following description, but the potential of both of the nodes may vary.

When being simply used in this specification, the term "impurity concentration" denotes a net impurity concentration compensated by subtracting impurities of a reverse conducting type. The term "impurity concentration" thus denotes a net doping concentration. On the other hand, a region where an n-type doped impurity concentration is higher than a p-type doped impurity concentration is an n-type semiconductor region.

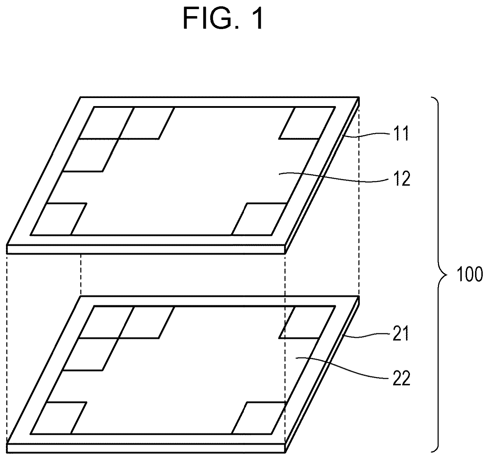

A configuration common to embodiments of a photoelectric conversion device and a method for driving the photoelectric conversion device according to the present invention will be described by using Figs. 1 to 5.

Fig. 1 is a chart illustrating the configuration of a photoelectric conversion device with stacked layers according to the embodiments of the present invention. A photoelectric conversion device 100 includes a sensor chip 11 and a circuit chip 21 that are two chips laminated and electrically connected. The sensor chip 11 has a pixel region 12, and the circuit chip 21 has a circuit region 22 where a signal detected in the pixel region 12 is processed.

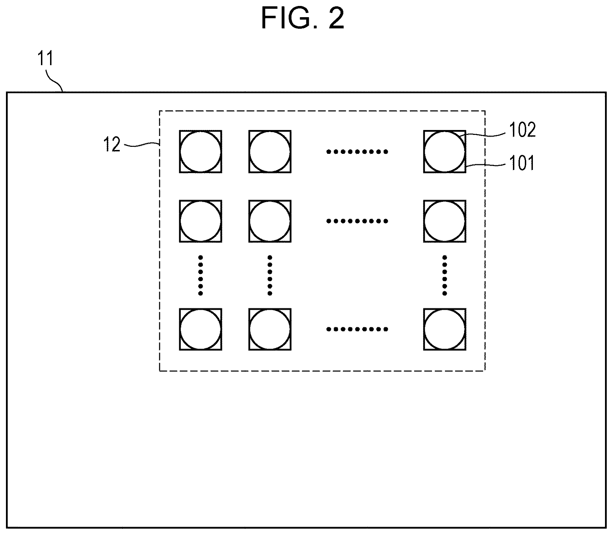

Fig. 2 is a plot plan of the sensor chip 11. The pixel region 12 is composed of pixels 101 that each have a photoelectric conversion section 102 including an APD and that are arranged in an array form in a plurality of columns and rows. Each pixel 101 is typically a pixel for image forming but is not necessarily used for image forming if the pixel 101 is used for time of flight (TOF). The pixel 101 may thus be a pixel for measuring time of light arrival and the quantity of light.

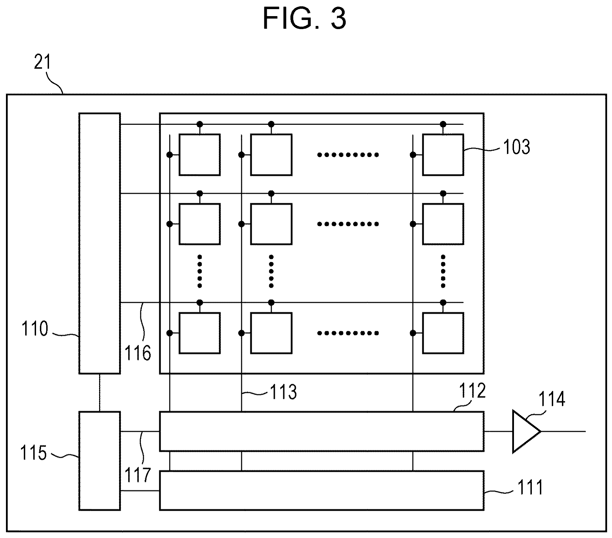

Fig. 3 is a chart of the configuration of the circuit chip 21. The circuit chip 21 has signal processing sections 103, a readout circuit 112, a control pulse generation section 115, a vertical scan circuit section 111, signal lines 113, and a horizontal scan circuit section 110. Each signal processing section 103 processes a charge having undergone photoelectric conversion in the corresponding photoelectric conversion section 102 in Fig. 2.

The photoelectric conversion section 102 in Fig. 2 and the signal processing section 103 in Fig. 3 are electrically connected via a connection wiring line provided on a per-pixel basis.

The horizontal scan circuit section 110 receives a control pulse supplied from the control pulse generation section 115 and supplies a control pulse to the corresponding pixel. A logic circuit such as a shift register or an address decoder is used as the horizontal scan circuit section 110.

A signal output from the photoelectric conversion section 102 of the corresponding pixel is processed in the corresponding signal processing section 103. The signal processing section 103 is provided with a counter, a memory, and the like, and the memory holds digital values.

To read out a digital signal from the pixel memory holding the signal, the vertical scan circuit section 111 inputs, to one of the signal processing sections 103, a control pulse used to select a column in order.

A signal is output, to one of the signal lines 113 in the selected column, from one of the signal processing sections 103 in the pixel selected by the horizontal scan circuit section 110.

The signal output to the signal line 113 is output to a recording unit or a signal processing unit outside the photoelectric conversion device 100 via an output circuit 114.

In Fig. 2, the pixels 100 in the pixel region 12 may be arranged one-dimensionally. The function of the signal processing section 103 is not necessarily provided to all of the pixels 101. For example, a plurality of pixels 101 may share one signal processing section 103, and signal processing may be performed in turn.

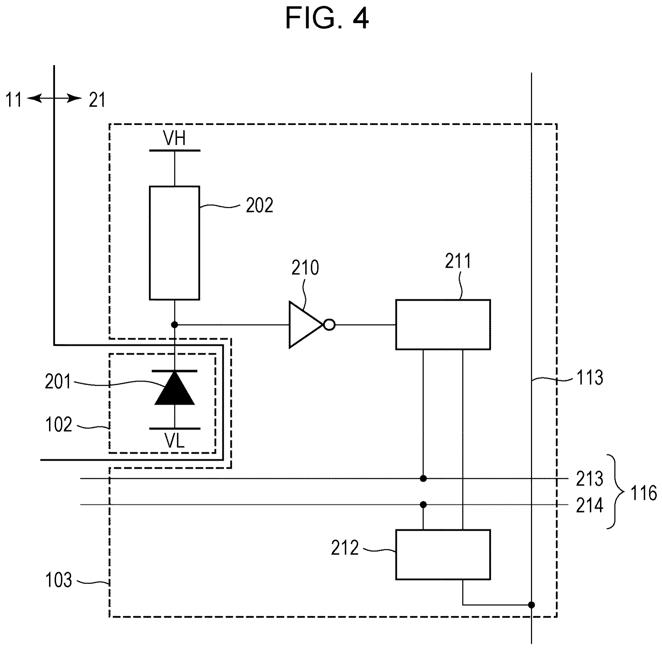

Fig. 4 is an example of the block diagram including an equivalent circuit in Figs. 2 and 3. In Fig. 2, the photoelectric conversion section 102 having an APD 201 is provided to the sensor chip 11, and other members are provided to the circuit chip 21.

The APD 201 performs photoelectric conversion and thereby generates charge pairs based on incident light. A voltage VL (first voltage) is supplied to the anode of the APD 201. A voltage VH (second voltage) higher than the voltage VL supplied to the anode of the APD 201 is supplied to the cathode thereof. Such reverse bias voltages that cause the APD 201 to perform an avalanche multiplication operation are supplied to the anode and the cathode. Creating the state where such voltages are supplied causes avalanche multiplication in a charge generated from the incident light and thereby causes avalanche current.

In a case where a reverse bias voltage is supplied, there are a Geiger mode and a linear mode. In the Geiger mode, operation is performed in response to a difference between the anode and the cathode, the potential difference being higher than a breakdown voltage. In the linear mode, operation is performed in response to a potential difference between the anode and the cathode, the potential difference being close to the breakdown voltage or lower than or equal to the breakdown voltage. An APD causing the operation in the Geiger mode is referred to as a SPAD. For example, the voltage VL (first voltage) is -30V, and the voltage VH (second voltage) is 1V.

A quenching element 202 is connected to a power source that supplies the voltage VH and the APD 201. The quenching element 202 has a function of turning an avalanche current change in the APD 201 into a voltage signal. The quenching element 202 functions as a load circuit (quenching circuit) at the time of signal multiplication due to avalanche multiplication and thus has a function of suppressing the avalanche multiplication by decreasing a voltage to be supplied to the APD 201 (quenching).

The signal processing section 103 has a waveform shaping section 210, a counter circuit 211, and a selection circuit 212. In this specification, it suffices that the signal processing section 103 have one of the waveform shaping section 210, the counter circuit 211, and the selection circuit 212.

The waveform shaping section 210 shapes a potential change in the cathode of the APD 201 that is acquired in photon detection and outputs a pulse signal. For example, an inverter circuit is used as the waveform shaping section 210. Although Fig. 4 illustrates the use of one inverter as the waveform shaping section 210; however, a circuit in which a plurality of inverters are connected in series may be used, and another circuit exerting a waveform shaping effect may also be used.

The counter circuit 211 counts pulse signals output from the waveform shaping section 210 and holds a count value. When a control pulse pRES is supplied through a drive line 213, the signals held in the counter circuit 211 are reset.

The selection circuit 212 receives a control pulse pSEL from the horizontal scan circuit section 110 in Fig. 1 through a drive line 214 (not illustrated in Fig. 3) in Fig. 4 and performs switching between electrical connection and non-connection between the counter circuit 211 and the signal line 113. The selection circuit 212 includes, for example, a buffer circuit for outputting a signal.

A switch such as a transistor may be disposed between the quenching element 202 and the APD 201 or between the photoelectric conversion section 102 and the signal processing section 103 to perform electrical connection switching. Likewise, switching in supplying the voltage VH or the voltage VL to the photoelectric conversion section 102 may be electrically performed by using a switch such as a transistor.

The configuration using the counter circuit 211 is illustrated for this embodiment. However, instead of the counter circuit 211, a time-to-digital conversion circuit (time-to-digital converter, herein referred to as a TDC) and a memory may be used to serve as the photoelectric conversion device 100 that acquires pulse detection timing. At this time, the TDC converts the pulse signal output from the waveform shaping section 210 to a digital signal at the generation timing. To measure the pulse signal timing, a control pulse pREF (reference signal) is supplied to the TDC from the horizontal scan circuit section 110 in Fig. 1 through the drive line. The TDC acquires, as the digital signal, a signal output from a pixel via the waveform shaping section 210 by using the control pulse pREF as reference and relative time based on timing of inputting the signal.

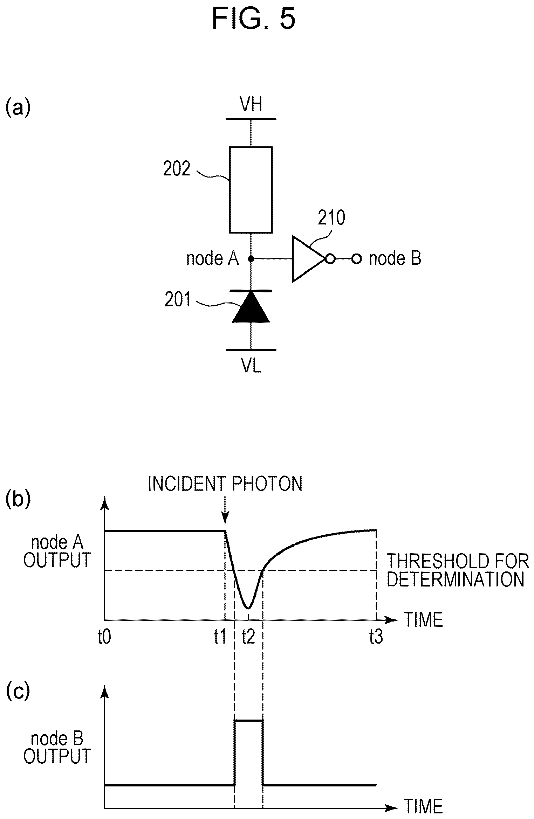

Fig. 5 is a chart schematically illustrating a relationship between APD operation and an output signal. Fig. 5(a) is a chart of the APD 201, the quenching element 202, and the waveform shaping section 210 extracted from Fig. 2. A point on the input side of the waveform shaping section 210 is a node A, and a point on the output side thereof is a node B. Fig. 5(b) illustrates a waveform change at the node A in Fig. 5(a), and Fig. 5(c) illustrates a waveform change at the node B in Fig. 5(a).

In a period from time t0 to t1, a VHVL potential difference is applied to the APD 201 in Fig. 5(a).

In response to a photon entering at time t1, avalanche multiplication current flows to the quenching element 202, and the voltage at the node A drops. When the voltage drop amount is further increased and the potential difference applied to the APD 201 is decreased, the avalanche multiplication of the APD 201 is stopped, and the drop in the voltage level of the node A stops at a constant value or higher. Thereafter, current compensating for an amount corresponding to the voltage drop from the voltage VL flows to the node A, and the potential at the node A settles to the original potential level at time t3.

At this time, if the output waveform at the node A has a portion having a potential level exceeding a threshold, the waveform shaping section 210 shapes the portion of the waveform, and a resultant signal is output from the node B.

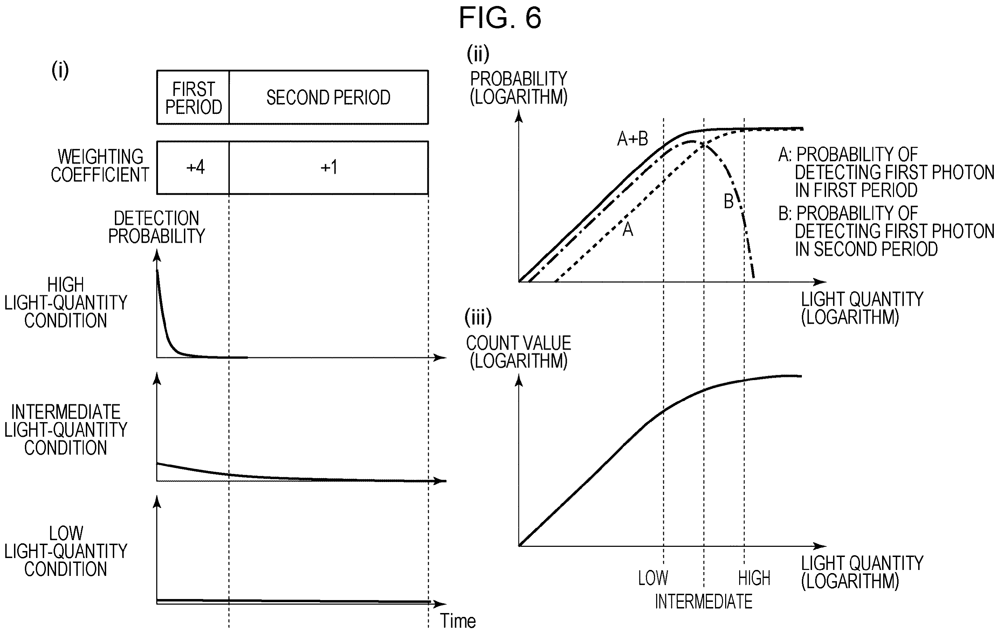

The principle of the present invention will be described by using Fig. 6. Fig. 6(i) is a chart representing an example of first-photon detection probabilities relative to time under light-quantity conditions and weighting coefficients for respective periods. Fig. 6(ii) is a graph representing photon detection probabilities relative to light quantity. Fig. 6(iii) is a graph representing photon detection signal count relative to light quantity. A photon detected first in a detection period is referred to as a first photon.

As illustrated in Fig. 6(i), under a high light-quantity condition, the first-photon detection probability is higher at earlier time and decreases with the elapse of time. In the case where the detection period is divided into a first period as an earlier half thereof and a second period as a later half, the detection of the first photon is highly likely to be completed in the first period. Under the intermediate light-quantity condition, the photon detection probability also decreases with the elapse of time but has lower time dependency on the first-photon detection probability than in the case of the high light-quantity, and there is a possibility of detecting the first photon in the second period. Under the low light-quantity condition, the first-photon detection probability hardly depends on the time.

In Fig. 6(ii), a broken line A represents first-photon detection probability in the first period relative to light quantity, and a broken line B represents first-photon detection probability in the second period relative to light quantity. A line A+B obtained by combining the broken line A and the broken line B represents first-photon detection probability regardless of the period relative to light quantity.

As represented by the broken line A, in the first period, the photon detection probability becomes higher as the light quantity increases and is saturated under the high light-quantity condition. Particularly under the low light-quantity condition to the intermediate light-quantity condition, the probability increases in an exponential manner as the light quantity increases. In contrast, as represented by the broken line B, in the second period, the photon detection probability becomes higher under the low light-quantity condition to the intermediate light-quantity condition as the light quantity increases, and the photon detection probability becomes lower under the intermediate light-quantity condition to the high light-quantity condition. This is because the first photon is detected in the first period in many cases under the high light-quantity condition, and a photon entering later than the first photon is detected in the second period. As represented by the line A+B obtained by combining the broken line A and the broken line B, the first-photon detection probability in the light quantity becomes higher under the low light-quantity condition to the intermediate light-quantity condition as the light quantity increases. The photon detection probability converges to a constant value under the intermediate light-quantity condition to the high light-quantity condition.

Fig. 6(iii) illustrates a graph of a count value relative to light quantity. Like the first-photon detection probability illustrated in Fig. 6(ii), photons after the second photon enter APDs. Accordingly, the count of photons increases under the low light-quantity condition to the intermediate light-quantity condition as the light quantity increases, and the count value is saturated under the intermediate light-quantity condition to the high light-quantity condition as the light quantity increases. It can be said that under the high light-quantity condition, the one-to-one correspondence between an increase of the count value and an increase of the incident photon count does not hold true, and weighting of a value in counting increases.

Further, in other words, it can be said that the expected value of the detected photon count depends on the light quantity under the low light-quantity condition to the intermediate light-quantity condition, but the weighting of the count value depends on the light quantity under the intermediate light-quantity condition to the high light-quantity condition.

### (First Embodiment)

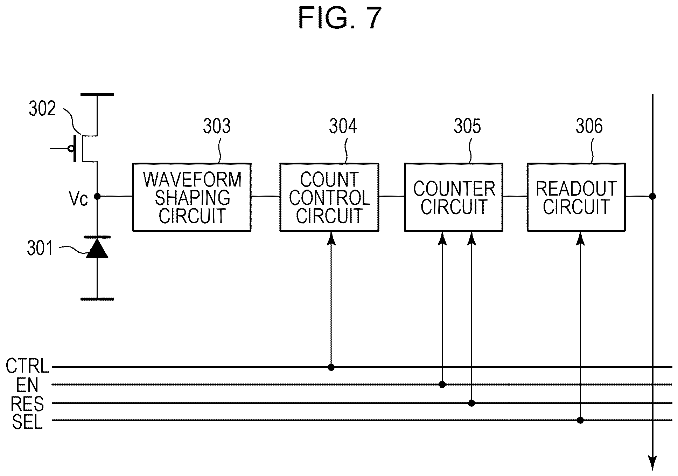

Fig. 7 illustrates a block diagram of each pixel of a photoelectric conversion device according to a first embodiment.

The voltage VL (first voltage) is supplied to the anode of an APD 301, and the voltage VH (second voltage) higher than the voltage VL supplied to the anode of the APD 301 is supplied to the cathode thereof. Such a reverse bias voltage that causes the avalanche multiplication operation is applied to the APD 301.

An output signal Vc of the APD 301 is input to the waveform shaping circuit 303 at the subsequent stage. A count control circuit 304, a counter circuit 305, and a readout circuit 306 are further provided at stages subsequent to the waveform shaping circuit 303, and an output signal is output from the readout circuit to the output line. The count control circuit 304 is controlled by using a control signal CTRL, and an enable signal EN and a reset signal RES are input to the counter circuit 305. A selection signal SEL is input to the readout circuit 306. In the photoelectric conversion device according to this embodiment, a fixed potential is input to a quenching element 302, and APDs that operate by a so-called passive recharge method are provided.

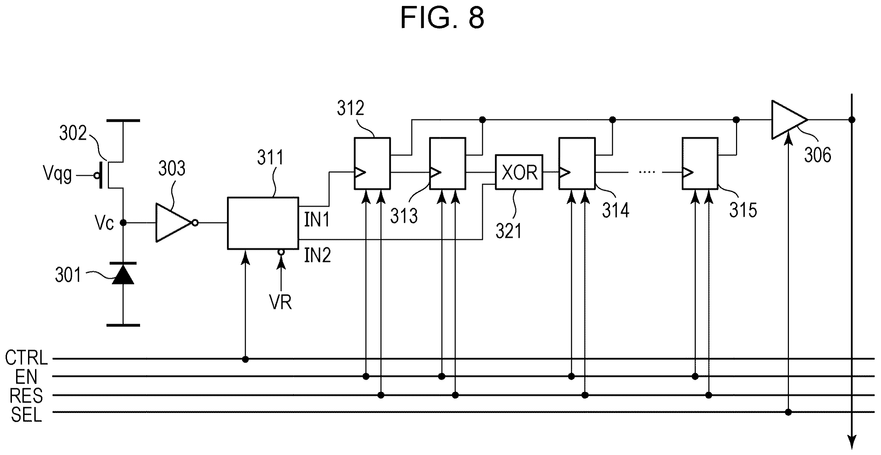

Fig. 8 illustrates an example circuit configuration of the photoelectric conversion device according to the first embodiment.

An inverter circuit is provided as an example of the waveform shaping circuit 303.

A control circuit 311 and an XOR circuit 321 are provided as the count control circuit 304, and T-flip-flop circuits 312, 313, 314, and 315 for forming an asynchronous binary counter are provided as the counter circuit 305. The readout circuit 306 is a tri-state buffer. In the example circuit configuration illustrated in Fig. 8, a signal corresponding to photon detection is selectively input to the least significant bit or the middle bit of the counter circuit 305 by using the control circuit 311, and thereby an integer value different depending on the photon detection timing is added to the counter circuit 305.

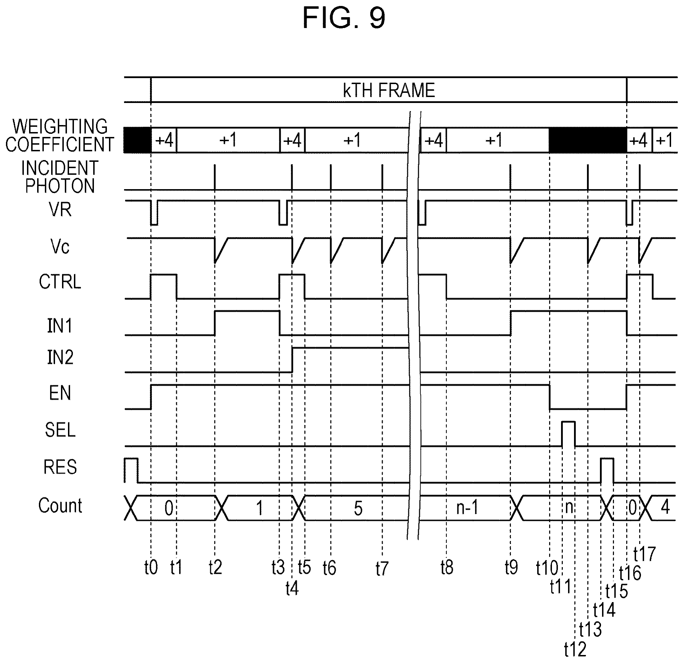

Fig. 9 illustrates a timing chart of operations of the photoelectric conversion device having the circuit illustrated in Fig. 8 in an exposure period corresponding to one frame. Hereinafter, L and H respectively represent a low state and a high state of a pulse signal.

In a case where a period from time to to time t1 is the first period, the control signal CTRL is controlled to H in the first period, and the weighting coefficient for the count value in this period is set to 4. A period from time t1 to time t3 that follows the first period and does not temporally overlap with the first period is the second period, and the control signal CTRL is controlled to L. In this period, the weighting coefficient for the count value is set to 1. After time t3, the driving operation of a signal VR and the control signal CTRL in the period from time to to time t3 is repeated a predetermined number of times.

At time t0, the enable signal EN rises, and exposure in the kth frame is started. Simultaneously, the signal VR is set to L, and the control circuit 311 is initialized. Signals IN1 and IN2 corresponding to output from the control circuit 311 after the initialization are both set to L.

When the photon enters the APD 301 at time t2, the output signal Vc drops. The output signal Vc is input, as the pulse signal shaped by the shaping circuit 303, to the control circuit 311, and IN1 is latched to H. IN1 is input to the T-flip-flop 312 serving as the least significant bit for the counter. The count value is thus increased by one.

The signal VR turns to L at time t3. The control circuit 311 is initialized again, and IN1 and IN2 both turn to L. The control signal CTRL is H in a period from time t3 to time T5.

When a photon enters the APD 301 at time t4, the output signal Vc drops, and the pulse signal is input to the shaping circuit 303. At this time, IN2 is latched to H and input to the XOR circuit 321. The other input end of the XOR circuit 321 has received a signal output from the T-flip-flop 313. IN2 is thus counted in such a manner as to be interposed as the middle bit of the counter, and the counter value is increased by four for every signal IN2.

Photons also enter the APD 301 at time t6 and time t7 but are not counted.

At time t10, the enable signal EN falls, and the exposure in the kth frame ends.

The selection signal SEL turns to H in a period from time t11 to time t12, and the signals held in the counter circuit 305 are read out to the outside of the pixel.

A photon enters the APD 301 at time t13 but is not counted because the enable signal EN is L.

The reset signal RES turns to H in a period from time t14 to t15, and the count value held by the counter circuit 305 is reset.

The enable signal EN rises again at time t16, and exposure in the (k+1)th frame is started.

A configuration in which one frame is divided into a plurality of sub frames and in which exposure is stopped based on comparison between a count value and a threshold in each sub frame has been discussed. However, the configuration as described above is likely to cause a LED flicker in response to exposure for short seconds, an anormal output value in response to a change in the light quantity in a frame, and lack of signal information.

According to the present invention, each of sub frames resulting from the division of the one frame is further divided unevenly, and a photon is counted in such a manner as to be weighted differently depending on the photon detection period. The configuration as described above prevents an exposure period from being cyclically stopped and thus enables influence of the LED flicker to be reduced and appropriate photon counting to be continued even though there is a change in the quantity of incident light in the frame.

The application of the present invention is not limited to the case where the weighting coefficient is uniformly set to all of the pixels arranged in the pixel region 12 (pixel array). For example, a first pixel group and a second pixel group are set in the pixel array, the duration of the first period and the duration of the second period or the combination of the weighting coefficients in the periods may be mutually different between the first pixel group and the second pixel group. The first pixel group and the second pixel group may be respectively located in the peripheral portion and the center portion of the pixel region.

### (Second Embodiment)

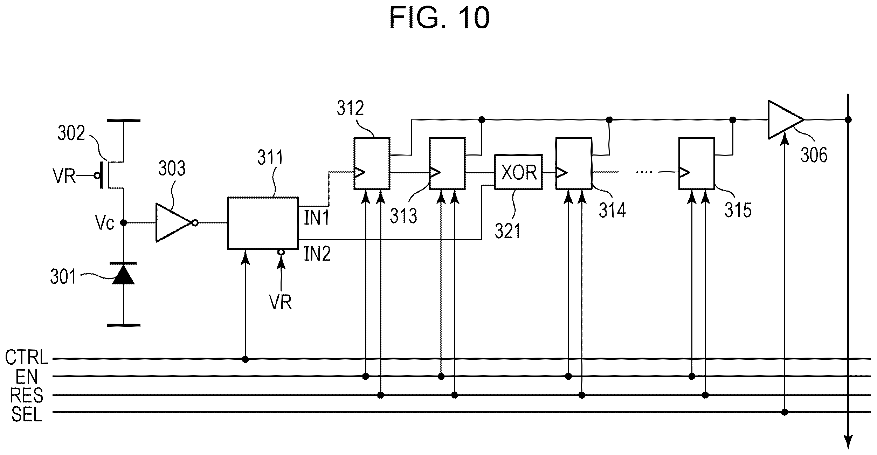

Fig. 10 illustrates an example circuit configuration of a photoelectric conversion device according to a second embodiment. The circuit configuration is the same as the configuration of the circuit of the photoelectric conversion device according to the first embodiment; however, the photoelectric conversion device according to this embodiment is characterized in that a clock signal VR is input to the quenching element 302 to cause so-called clocked recharge operation. The driving in this manner provides an advantageous effect of reducing current consumption in a high light-quantity environment.

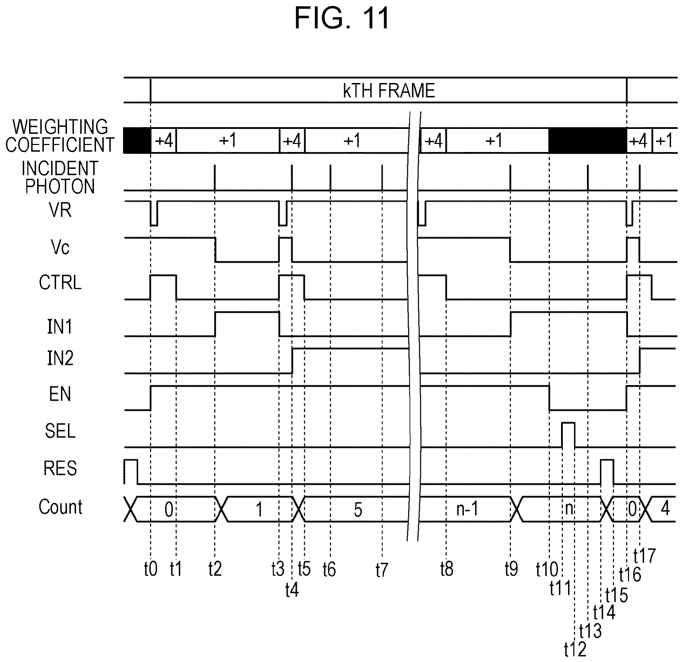

Fig. 11 illustrates a timing chart of operations, in one frame, of the photoelectric conversion device according to this embodiment.

The enable signal EN rises at time t0, and exposure in the kth frame is started.

At time t0, the clock signal VR is set to L for a short period, the cathode terminal of the APD 301 is connected to a power supply voltage to cause the APD 301 to enter a standby state. In this embodiment, in a period from time when the clock signal VR becomes L to time when the clock signal VR next becomes L, up to one photon is detected regardless of the number of photons entering the APD 301.

The control signal CTRL is controlled to H in a period from time t0 to time t1, and the weighting coefficient for the count value is 4 in this period. The control signal CTRL is controlled to L in a period from time t1 to time t3, and the weighting coefficient for the count value is 1 in this period. After time t3, the driving operation in the period from time t0 to time t3 is repeated a predetermined number of times.

When the photon enters the APD 301 at time t2, the output signal Vc drops. The output signal Vc is input, as a pulse signal shaped by the shaping circuit 303, to the control circuit 311, and IN1 turns to H. IN1 is input to the T-flip-flop 312 serving as the least significant bit for the counter. The count value is thus increased by one.

The clock signal VR turns to L at time t3, and the cathode terminal of the APD 301 is connected to the power supply voltage, and the APD 301 is recharged. Simultaneously, the control circuit 311 is initialized, and IN1 and IN2 turn to L. When the signal VR returns to H, the APD 301 enters the standby state. The control signal CTRL is H in a period from time t3 to time T5.

When the photon enters the APD 301 at time t4, the output signal Vc drops, and the pulse signal is input to the shaping circuit 303. At this time, IN2 turns to H and is input to the XOR circuit 321. The other input end of the XOR circuit 321 has received a signal output from the T-flip-flop 313. IN2 is thus counted in such a manner as to be interposed as the middle bit of the counter, and the counter value is increased by four for every signal IN2

Photons also enter the APD 301 at time t6 and time t7; however, Vc has dropped due to avalanche multiplication caused by the photon entering at time t4, and a newly entering photon does not cause the avalanche multiplication. Accordingly, addition to the counter value is not performed.

At time t10, the enable signal EN falls and the exposure in the kth frame ends.

The selection signal SEL turns to H in a period from time t11 to time t12, and the signals held in the counter circuit 305 are read out to the outside of the pixel.

A photon enters the APD 301 at time t13 but is not counted because the enable signal EN is L.

The reset signal RES turns to H in a period from time t14 to time t15, and the count value held by the counter circuit 305 is reset.

The enable signal EN rises at time t16, and exposure in the (k+1)th frame is started.

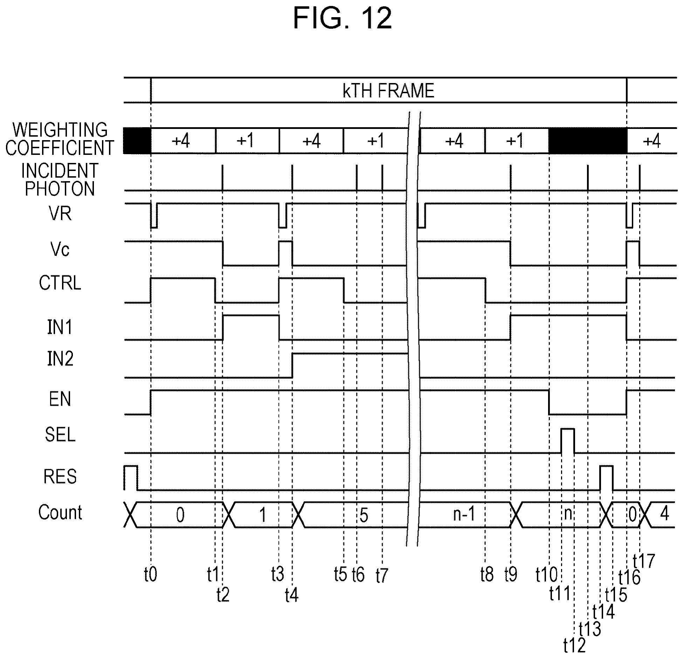

Fig. 12 illustrates a timing chart according to a modification of the second embodiment. In this embodiment, a period from time t0 to time t1 and a period from time t1 to time t3 have the same duration. The duration of the period assigned the weighting coefficient of 4 and the duration of the period assigned the weighting coefficient of 1 are thus set equally.

The enable signal EN rises at time t0, and exposure in the kth frame is started. Simultaneously, the signal VR is set to L, and the APD 301 is recharged. The APD 301 enters the standby state when the signal VR turns to H and is capable of detecting up to one photon from photons entering the APD 301 by the time the signal VR is turned to L next.

In a period from time to to time t1, the control signal CTRL is controlled to H, and the weighting coefficient for the count value is 4 in this period. In a period from time t1 to time t3, the control signal CTRL is controlled to L, and the weighting coefficient for the count value is 1 in this period. After time t3, the driving operation of the signal VR and the control signal CTRL in the period from time to to time t3 is repeated a predetermined number of times.

When the photon enters the APD 301 at time t2, the output signal Vc drops. The output signal Vc is input, as the pulse signal shaped by the shaping circuit 303, to the control circuit 311, and IN1 turns to H. IN1 is input to the T-flip-flop 312 serving as the least significant bit for the counter. The count value is thus increased by one.

The signal VR turns to L at time t3. The cathode terminal of the APD 301 is connected to the power supply voltage, and the APD 301 is recharged. When the signal VR returns to H, the APD 301 enters the standby state. The control signal CTRL is H in a period from time t3 to time T5.

When a photon enters the APD 301 at time t4, the output signal Vc drops, and the pulse signal is input to the shaping circuit 303. At this time, IN2 turns to H and is input to the XOR circuit 321. The other input end of the XOR circuit 321 has received a signal output from the T-flip-flop 313. IN2 is thus counted in such a manner as to be interposed as the middle bit of the counter, and the counter value is increased by four for every signal IN2.

Photons also enter the APD 301 at time t6 and time t7. However, the output signal Vc drops due to avalanche multiplication caused by the photon entering at time t4 in the same recharging cycle, and a voltage higher than or equal to the breakdown voltage is not applied to the APD 301 in this state. The photons entering at time t6 and time t7 thus do not cause the avalanche multiplication. The addition to the counter value in response to the photon detection is not performed, either.

At time t10, the enable signal EN falls, and the exposure in the kth frame ends.

The selection signal SEL turns to H in a period from time t11 to time t12, and the signals held in the counter circuit 305 are read out to the outside of the pixel.

A photon enters the APD 301 at time t13 but is not counted because the enable signal EN is L.

The reset signal RES turns to H in a period from time t14 to t15, and the count value held by the counter circuit 305 is reset.

The enable signal EN rises again at time t16, and exposure in the (k+1)th frame is started.

In the clocked recharge driving, a photon is counted in a period assigned the weighting coefficient of 1 in a case where a photon is not detected in a period from time to to time t1 and a photon is detected in a period from time t1 to time t3. For this reason, even if the duration of the period assigned the weighting coefficient of 4 and the duration of the period assigned the weighting coefficient of 1 are set equal, the probability of counting a photon in the period assigned the weighting coefficient of 4 is higher than the probability of counting a photon in the period assigned the weighting coefficient of 1.

The duration of each period assigned the weighting coefficient and the weighting coefficient are an example and are not limited to these. The duration of the period assigned the weighting coefficient may be set appropriately for the set weighting coefficient.

### (Third Embodiment)

In a third embodiment described below, the method by which a pulse is interposed as the middle bit of the counter as described for the first embodiment is not used. Instead, pulses the number of which varies depending on photon detection timing are input to the counter circuit, and thereby weighting counting is performed. According to the configuration as described above, the circuit size of the pixel circuit may be made smaller than in the case illustrated for the first embodiment.

In the first embodiment and the second embodiment, the frame period is divided into two sub frames, and the count value is weighted by using two types of weighting coefficients for the respective sub frames. In this embodiment, the frame period is divided into, for example, three types of sub frames. In addition, three types of weighting coefficients may be provided.

By appropriately setting the number of divided sub frames of the frame period and the weighting coefficients, both of SNR improvement and dynamic range increase may be achieved.

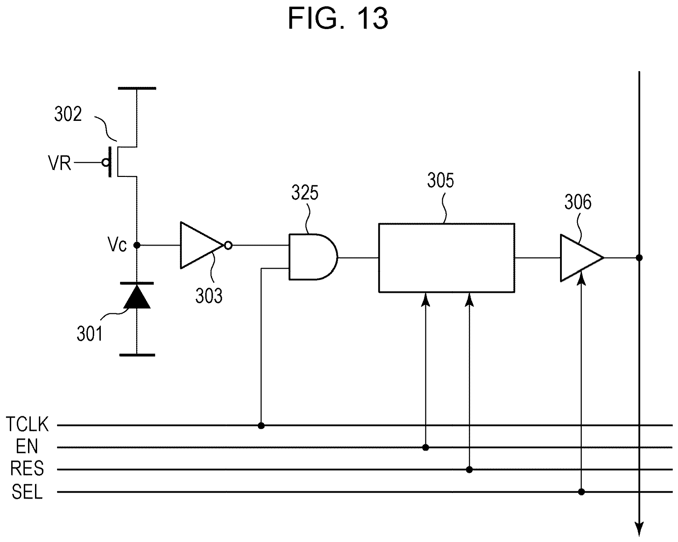

Fig. 13 illustrates an example circuit configuration of a photoelectric conversion device according to the third embodiment.

The photoelectric conversion device has the same configuration as the photoelectric conversion device according to the first and second embodiments in the following points. The photoelectric conversion device according to the third embodiment has the quenching element 302 between the power source and the cathode terminal of the APD 301 and also has, at stages subsequent to the cathode terminal thereof, the waveform shaping circuit 303, an AND circuit 325, the counter circuit 305, and the readout circuit 306. An output signal of the waveform shaping circuit 303 is input to one of the terminals of the AND circuit 325, and a clock signal TCLK is input to the other end.

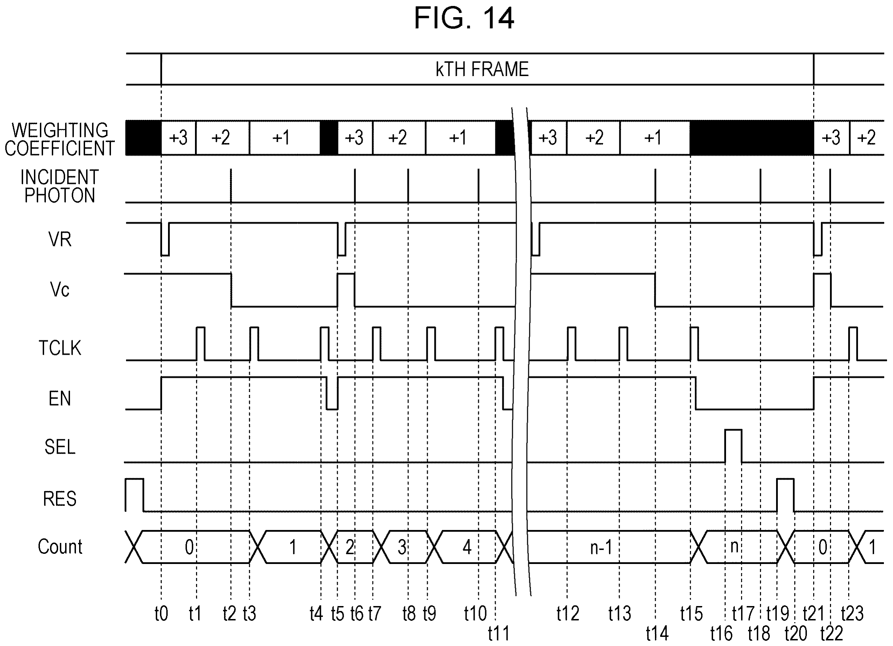

Fig. 14 illustrates a timing chart according to this embodiment.

The enable signal EN rises at time t0, and exposure in the kth frame is started.

In this embodiment, a period from time t0 to time t5 in Fig. 14 serves as one recharging cycle. Each of recharging periods is further divided into four periods, and a weighting coefficient is set for each period. The weighting coefficient herein denotes a total count to be added to the counter in the recharging cycle after the APD 301 receives a photon at target timing.

The clock signal TCLK turns to H at time t1. The clock signal TCLK is used to define timing for changing the weighting coefficient. If a photon has been detected in the recharging cycle, and if the output signal Vc turns to L, 1 is added to the count value of the counter circuit 305. At time t1, a photon has not been detected, and thus the addition to the counter value is not performed.

At time t2, a photon enters the APD 301, and the output signal Vc turns to L.

At time t3, the clock signal TCLK turns to H, and 1 is added to the count value of the counter circuit 305.

At time t4, the clock signal TCLK turns to H again, and 1 is added to the count value of the counter circuit 305. A total of 2 is thus added to the count value in a period from time t1 to t4.

In a period from time t4 to time t5, the enable signal EN is changed to L to cause the counter circuit 305 to enter a disable state. A photon entering the APD 301 in this period is not detected.

After time t5, operation in the period from time t0 to time t5 is repeated.

In the recharging cycle started with time t5, a photon enters the APD 301 at time t6. At time t7, time t9, and time t11, the clock signal TCLK turns to H, and 1 is added to the counter circuit 305 in synchronization with the rise of the clock signal TCLK. A total of 3 is thus added to the count value in a period from t5 to t11.

In a period from time t16 to time t17, a shaped signal SEL becomes H, and the signals held in the counter circuit 305 are read out to the outside of the pixel.

A photon enters the APD 301 at time t18, but a signal based on this photon is not counted because the enable signal EN is L.

In a period from time t19 to time t20, the reset signal RES turns to H, and the value held in the counter circuit 305 is reset.

At time t21, the enable signal EN rises, and exposure in the (k+1)th frame is started.

If a photon detection signal is output in the first period, a natural number N is added to the counter circuit 305. If a photon detection signal is output in the second period, a natural number M is added to the counter circuit 305. Further, if a photon detection signal is output in a third period, a natural number L is added to the counter circuit. At this time, the natural number N is greater than the natural number M, and the natural number L is less than the natural number M. In this embodiment, the case of setting the three types of weighting coefficients has heretofore been described; however, the number of set weighting coefficients is not limited to 3.

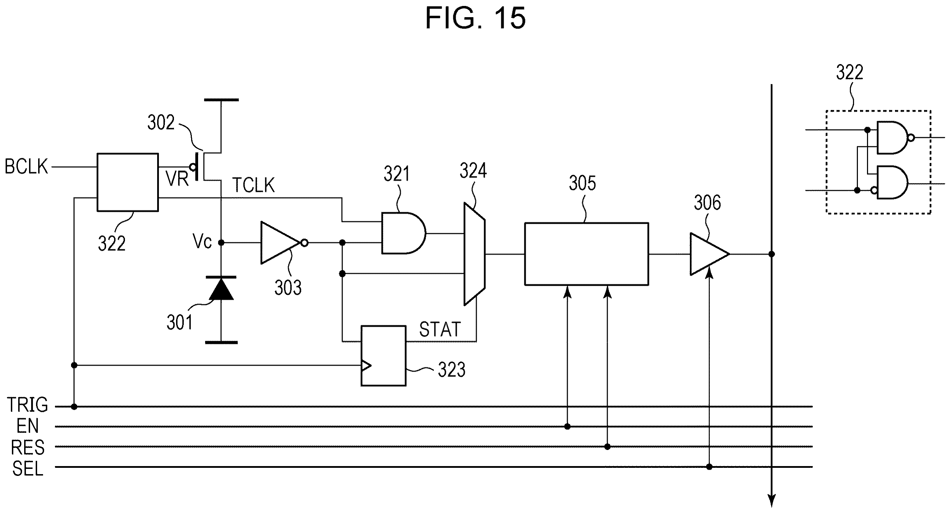

Fig. 15 illustrates a modification of the example circuit configuration of the photoelectric conversion device according to the third embodiment.

This configuration example is different from that of the circuit illustrated in Fig. 13 in that there are a control circuit 322, a D-flip-flop circuit 323, and a multiplexer 324. The D-flip-flop circuit 323 holds the history of the presence/absence of photo detection in the preceding recharging cycle. If a photon is not detected in the preceding recharging cycle, weighting is not performed of the count value in the current recharging cycle, and 1 is added. According to the configuration as described above, a possibility of counting noise as a photon detection result is reduced. Statistical variation in a count value is reduced, and SNR improvement is expected particularly in a low light-quantity environment.

A clock signal BCLK is a clock signal for generating the pulses of the clock signal VR and the clock signal TCLK. A trigger signal TRIG has pulses for selectively generating one of the clock signal VR and the clock signal TCLK from the clock signal BCLK. If a pulse of the clock signal BCLK is input when the trigger signal TRIG is H, the pulse in inverted logic is generated in the clock signal VR. If a pulse of the clock signal BCLK is input when the trigger signal TRIG is L, the positive logic value is generated in the clock signal TCLK.

Generating the clock signal VR and the clock signal TCLK by using the common clock signal BCLK leads to less influence of skew or the like than transmitting the clock signal VR and the clock signal TCLK through a different signal line and also leads to less image quality deterioration in the case of a large number of pixels.

The control circuit 322 is composed of, for example, combination of a NAND circuit and an AND circuit. The clock signal BCLK and the trigger signal TRIG are input to the input terminal of the NAND circuit. Inverted signals of the clock signal BCLK and the trigger signal TRIG are input to the input terminal of the AND circuit.

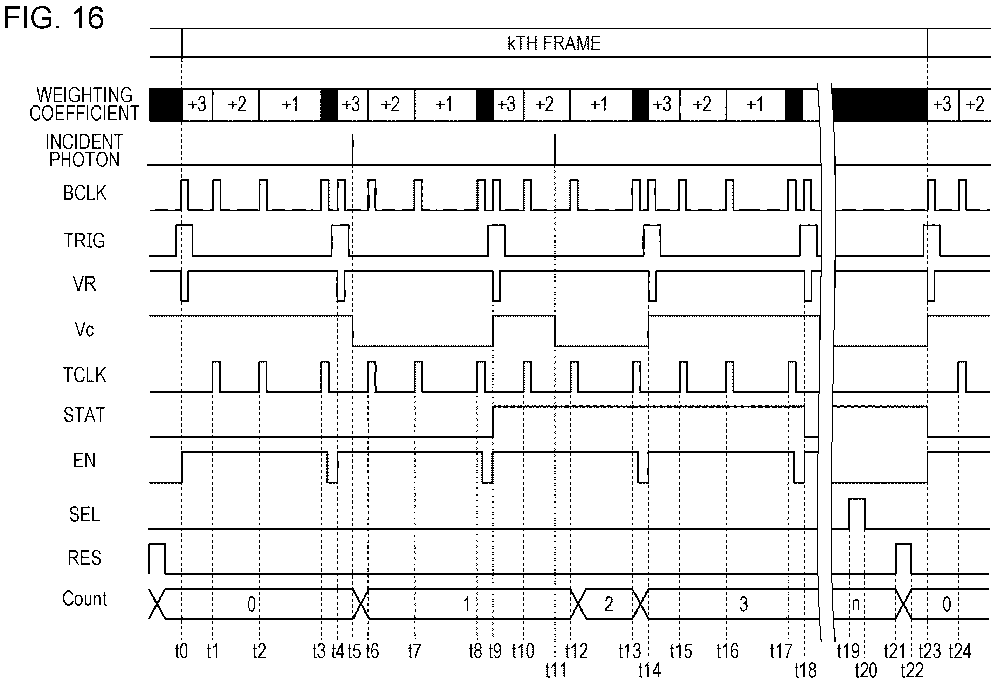

Fig. 16 illustrates a timing chart of the example configuration illustrated in Fig. 15.

The D-flip-flop circuit 323 sets a signal STAT to L if a photon is detected and sets the signal STAT to H if a photon is detected in the preceding recharging cycle. If the signal STAT is L, and if a photon is detected in the target cycle, 1 is added to the count value regardless of the timing. If the signal STAT is H, and if a photon is detected in the target cycle, one of 3, 2, and 1 is added to the counter according to the timing.

At time to, the enable signal EN rises, and exposure in the kth frame is started.

In a period from time to to time t4, a photon is not detected. In the recharging cycle from time t4, the signal STAT is L.

A photon is detected at time t5. Since the signal STAT is L, 1 is added to the counter simultaneously with the occurrence of the photon detection event.

In a period from time t9 to time t14, the signal STAT turns to H because a photon is detected in the preceding recharging cycle (time t4 to time t9).

A photon is detected at time t11. Since the signal STAT is H, 1 is added to the count value at each of time t12 and time t13 when the clock signal TCLK rises, and thus a total of 2 is added.

In a period from time t14 to time t18, the signal STAT is still H because a photon is detected in the preceding recharging cycle (time t9 to time t14). After this period, the signal STAT is H if a photon is detected in a preceding recharging cycle, and the signal STAT is L if a photon is not detected.

The enable signal EN falls at time t15, and incident light after this time is not counted.

At time t23, the enable signal EN rises, and exposure in the (k+1)th frame is started. The signal STAT may be forced to L in response to the frame change. Alternatively, in response to the photon detection result in the last recharging cycle in the kth frame, the level of the signal STAT in the first recharging cycle in the (k+1)th frame may be decided.

In this embodiment, the count weighting method is changed based on the presence/absence of photo detection in the preceding recharging cycle; however, the weighting method may be changed based on the presence/absence of photo detection in a recharging cycle two or more recharging cycles before the target recharging cycle and may also be changed based on the presence/absence of photo detection in a plurality of recharging cycles in the past.

### (Fourth Embodiment)

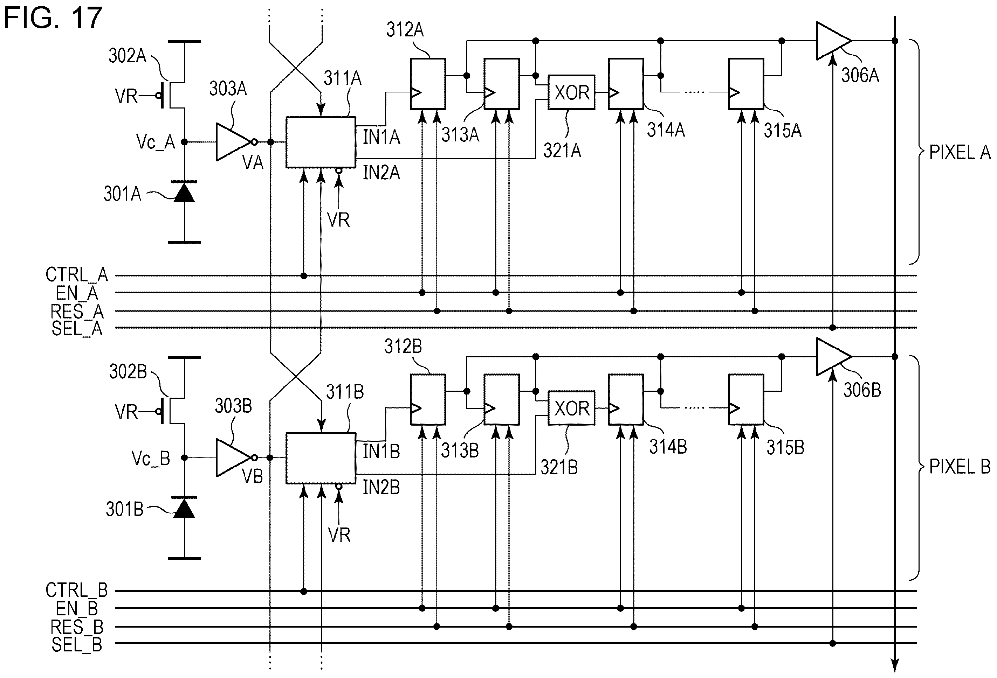

Fig. 17 illustrates an example circuit configuration of a photoelectric conversion device according to a fourth embodiment.

The photoelectric conversion device according to this embodiment is characterized in that whether to count a photon in the target pixel is controlled based on the presence/absence of photo detection in a neighboring pixel disposed around the target pixel. A predetermined value is added to the counter at the time point when a photon is detected in each of a target pixel A and a neighboring pixel B in the same recharging cycle. One proximate pixel or a plurality of proximate pixels may serve as a neighboring pixel to be referred to for signal addition for the target pixel. Pixels arranged in the array form may form a network one-dimensionally or two-dimensionally, and proximate pixels may mutually refer to a photon detection state. In the following description, a pixel that neighbors the target pixel is a neighboring pixel; however, a relationship between the target pixel and the neighboring pixel is not limited to this relationship.

Fig. 17 illustrates the target pixel A in the upper part and the neighboring pixel B in the lower part. The target pixel A and the neighboring pixel B have the same configuration. The quenching element 302 is thus disposed between the power source and the cathode terminal of the APD 301, and the waveform shaping circuit 303 is connected to the cathode terminal. The control circuit 311, the T-flip-flop circuits 312 to 315 forming the counter circuit 305, the XOR circuit 321, and the readout circuit 306 are connected at stages subsequent to the waveform shaping circuit 303. Elements corresponding to the target pixel A and the neighboring pixel B are denoted by reference numerals shared by the target pixel A and the neighboring pixel B and are distinguished from each other by using A and B suffixed to the reference.

The photoelectric conversion device according to this embodiment is different from the photoelectric conversion devices in the first to third embodiments in that wiring for mutual connection between a control circuit 311A and a control circuit 311B is provided. The control circuit 311A performs control of output of IN1A and IN2A based on an output signal VA of the target pixel A and an output signal VB of the neighboring pixel B. For example, one of IN1A and IN1B is latched to H according to timing when both of VA and VB become H.

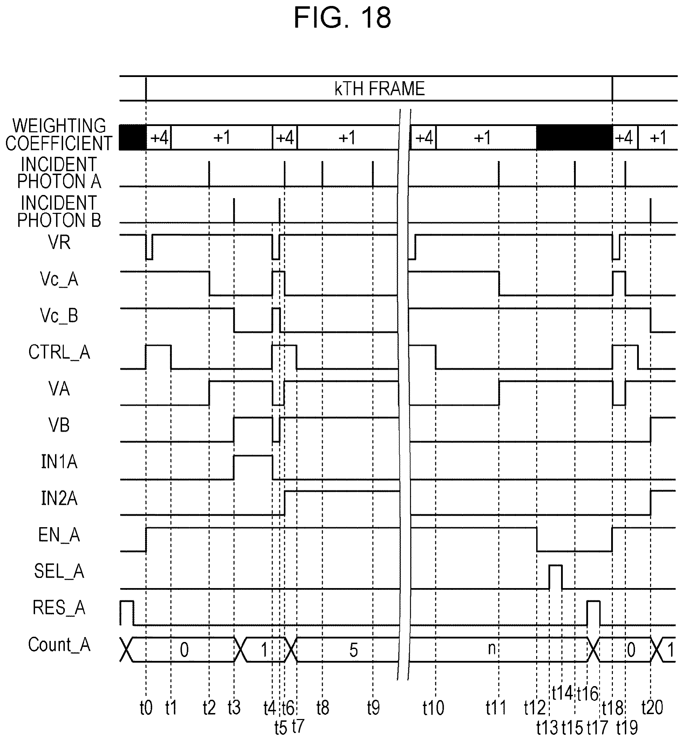

Fig. 18 illustrates a timing chart of the pixel A and the pixel B using the configuration in Fig. 17.

At time t0, the enable signal EN rises, and exposure in the kth frame is started. A period from time t0 to time t4 serves as one recharging cycle.

At time t2, an APD 301A detects a photon. Since the neighboring pixel B neighboring the target pixel A has not detected a photon at this time, a signal is not added to the counter circuit 305.

At time t3, an APD 301B of the neighboring pixel B also detects a photon. In response to the rise of an output VB of a waveform shaping circuit 303B, IN1A turns to H, and a signal is added to the counter circuit 305. Since the control signal CTRL is L at time t3, an added count value is 1.

At time t5, the APD 301B of the neighboring pixel B detects a photon. At time t6, the APD 301A of the target pixel A detects a photon. Since the control signal CTRL is H at the time point of time t6, IN2A turns to H in response to the rise of the output VB of 303B, and a signal is added to an XOR circuit 321A. That is, 4 is added to the count value.

The presence/absence of photo detection of the neighboring pixel is reflected in the addition of the count value of the target pixel as described above, and thereby effective sensitivity may be appropriately controlled. This enables gradation to be ensured with a higher light quantity and a dynamic range to be increased.

### (Fifth Embodiment)

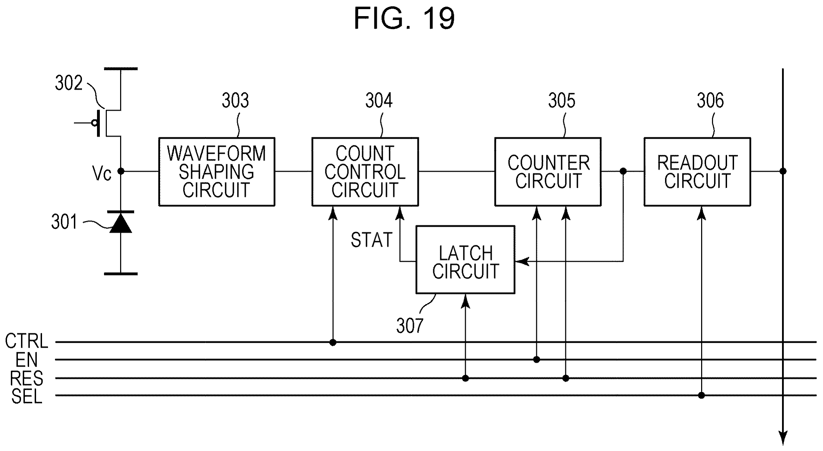

Fig. 19 illustrates an example circuit configuration of a photoelectric conversion device according to a fifth embodiment. In the photoelectric conversion device illustrated in this embodiment, the weighting coefficient for the count value is changed if the count value of the counter circuit 305 exceeds a predetermined threshold.

In the example configuration illustrated in Fig. 19, the photoelectric conversion device has the quenching element 302 between the power source and the cathode terminal of the APD 301, and the waveform shaping circuit 303 is connected to the cathode terminal. The count control circuit 304, the counter circuit 305, and the readout circuit 306 are arranged at stages subsequent to the waveform shaping circuit 303. The output from the counter circuit 305 is also input to a latch circuit 307, and an output signal STAT of the latch circuit 307 is input to the count control circuit 304.

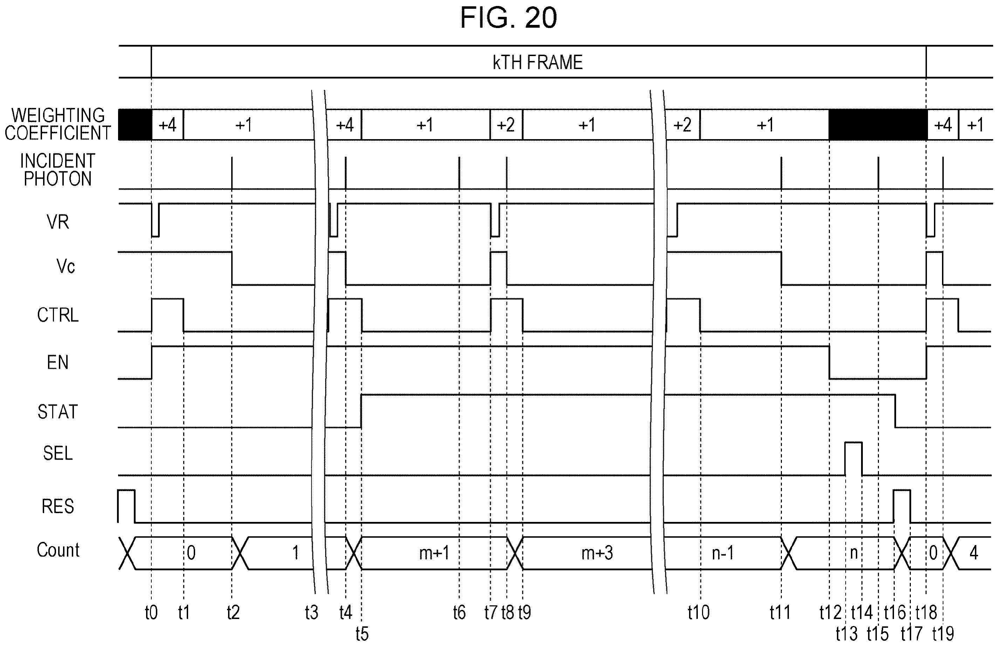

Fig. 20 illustrates a timing chart in the case of using the photoelectric conversion device in configuration illustrated in Fig. 19.

At time t0, the enable signal EN rises, and exposure in the kth frame is started. A period from time t0 to time t3 serves as one recharging cycle. When the control signal CTRL is H, 4 is added to the count value. When the control signal CTRL is L, 1 is added to the count value. In this embodiment, a threshold for the count value is set as m.

At time t1, the control signal CTRL falls from H to L. At this time, the output signal STAT is L.

At time t2, a photon enters the APD 301, and the output signal Vc falls. Since the control signal CTRL is L, 1 is added to the count value.

At time t4, the APD 301 detects a photon, and the count value becomes m+1. Since the count value exceeds the threshold m, the output signal STAT is changed from L to H.

In recharging cycles after time t7, 2 is added to the count value when the control signal CTRL is H, and 1 is added to the count value when the control signal CTRL is L.

According to the configuration as described above, the circuit size of the photoelectric conversion device may be reduced, and at the same time the dynamic range may be increased.

### (Sixth Embodiment)

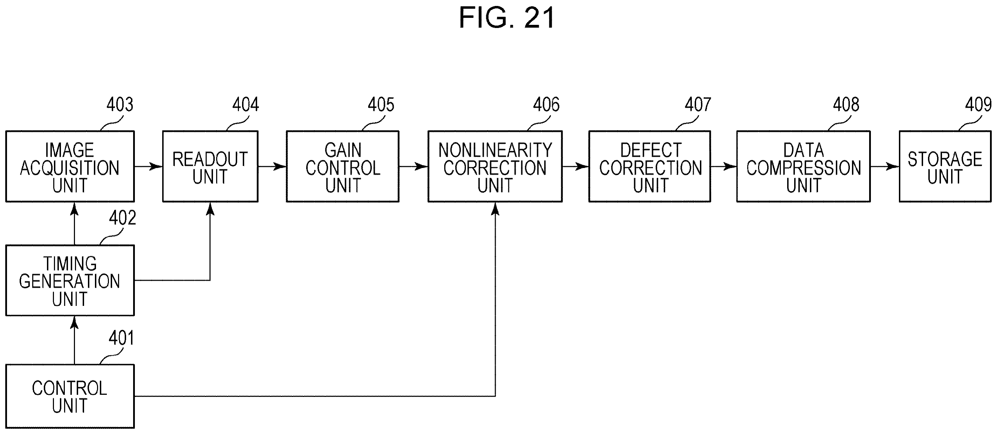

A photoelectric conversion system using the photoelectric conversion device according to any of the embodiments described above will be described by using Fig. 21. Fig. 21 is a block diagram illustrating the schematic configuration of the photoelectric conversion system according to this embodiment.

The processing device according to a sixth embodiment has a control unit 401, a timing control unit 402, an image acquisition unit 403, a readout unit 404, a gain control unit 405, a nonlinearity correction unit 406, a defect correction unit 407, a data compression unit 408, and a storage unit 409.

The image acquisition unit 403 is, for example, the pixel 101 in the pixel region 12 illustrated in Fig. 2, and the readout unit 404 is, for example, the signal processing section 103 in Fig. 3. The timing control unit 402 is, for example, the control pulse generation section 115 in Fig. 3. The control unit 401 may be a control unit inside the photoelectric conversion device or may be provided outside the photoelectric conversion device. The image acquisition unit 403 is controlled by the timing control unit 402 controlled by the control unit 401.

Image data generated by the image acquisition unit is corrected and then is input to the storage unit 409. The order of the correction is not limited to the order illustrated in Fig. 21.

The gain control unit 405 is disposed between the readout unit 404 and the nonlinearity correction unit 406 and multiplies, by a digital gain, the image data generated by the image acquisition unit 403. The data for image correction often has a decimal value. If an integer is used for image output, a quantization error is likely to deteriorate correction accuracy. By multiplying the image data by the gain in advance, an influence of the quantization error may be reduced, and the correction accuracy may be increased. If the quantization error can be reduced to one fourth or less of the single-photon signal level, an image becomes visually natural after the correction. Accordingly, the digital gain to be used for the multiplication of the image data is preferably, for example, four times or higher.

The nonlinearity correction unit 406 is disposed between the gain control unit 405 and the defect correction unit 407 and corrects the image data under the control of the control unit 401. As described for the embodiments above, if the image acquisition unit 403 is a detector of the photon counting type, a nonlinear optical response often occurs due to the influence of dead time. Performing correction on the assumption of a linear response under the influence of the nonlinear optical response results in excessive correction on occasions. For this reason, by performing nonlinearity correction on the image data at a stage before arithmetic processing by the defect correction unit 407, excessive correction may be prevented, and appropriate nonlinearity correction according to the driving timing may be performed. The nonlinearity correction is performed, for example, by using a lookup table.

The defect correction unit 407 corrects data regarding a defective pixel included in the image data. In a specific example, the output value of the defective pixel is extracted, and the positional information regarding the defective pixel and the output value are identified. There are a method by which the data is replaced with a mean value or a median of output from pixels around the identified defective pixel and a method by which division is performed on estimated defective image data.

The data compression unit 408 compresses the corrected image data. In the photoelectric conversion device according to the present invention, a large amount of image data for a high dynamic range are generated. Providing the data compression unit 408 enables the data to be compressed before the data is stored in the storage unit 409 at the subsequent stage.

The storage unit 409 is a storage unit that stores at least a subset of the image data generated at the previous stage. Specifically, a memory such as a SRAM, a DRAM, or a nonvolatile memory serves as the storage unit, and the image data is stored therein.

According to this embodiment as described above, a photoelectric conversion system to which the photoelectric conversion device illustrated in any of the embodiments described above is applied may be implemented.

### (Seventh Embodiment)

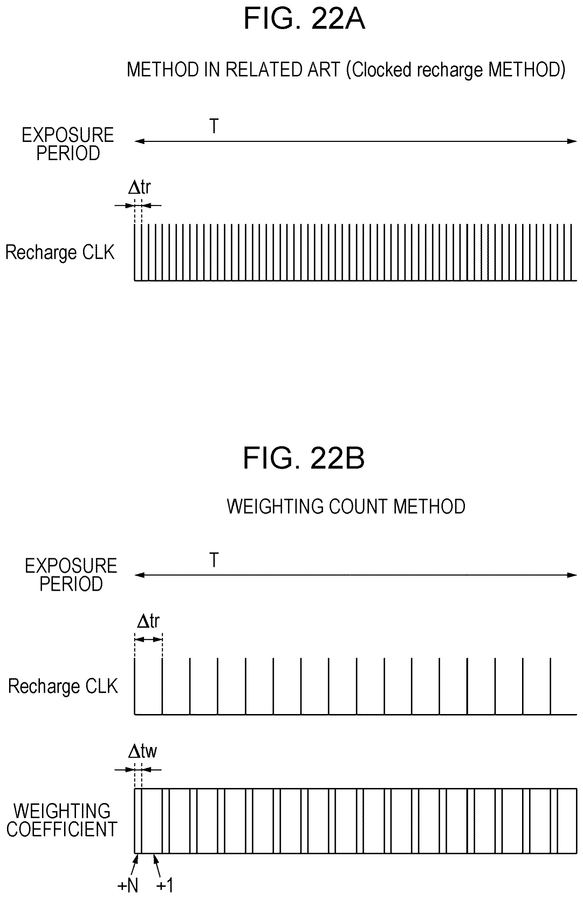

The advantageous effects of the present invention will be described further by using Figs. 22A and 22B. In the following description, a method performed in a case of performing an addition according to any of the embodiments described above is referred to as a weighting count method.

In a clocked recharge method in the related art illustrated in Fig. 22A, the estimated maximum incident photon count is decided based on the count of Recharge CLK (clock signals TCLK). Accordingly, the greater the count of Recharge CLK, the wider the dynamic range. In contrast, power consumption increases in proportion to the Recharge CLK count, and thus the dynamic range and the power consumption have a tradeoff relationship.

In a case where an exposure period is T, and the pulse interval of Recharge CLK is Δtr, the Recharge CLK count is expressed by T/Δtr, and thus the dynamic range may be considered to be decided by T/Δtr.

In contrast, as illustrated in Fig. 22B, in the weighting count method, an incident photon count is estimated from photon incident timing. The estimated maximum incident photon count is decided by T/Δtw. Note that Δtw corresponds to the first period in the first embodiment and is a period in which the integer value is added to the counter circuit. The estimated maximum incident photon count thus does not depend on the Recharge CLK interval Δtr, and the dynamic range and the power consumption do not have the tradeoff relationship. The weighting coefficient at this time is preferably Δtr/Δtw.

Specific example numerical values are described below. According to the method in the related art, an exposure period T is 1024, and Δtr is 1. In this case, the maximum avalanche count is 1024, and the maximum detected incident photon count at this time is 1024. In contrast, according to the weighting count method, the exposure period T is 1024, Δtr is 4, and Δtw is 1. In this case, the maximum avalanche count is 256. If addition is performed on the counter circuit such that the count corresponding to incident photons in Δtw is 4 that is Δtr/Δtw, the estimated maximum incident photon count at this time is 1024. Accordingly, power consumption involved with recharging may be reduced to one fourth of that in the method in the related art, and an equivalent dynamic range may be achieved.

The reason why Δtr/Δtw is preferable as the weighting coefficient is that the same saturation count can be acquired under the driving condition causing both of the methods to have the equivalent dynamic range. Such a condition enables an alias or the like in the nonlinearity correction to be reduced. However, the power consumption depends on only Δtr and does not depend on the weighting coefficient. Accordingly, the relational expression described above does not necessarily have to be required from the viewpoint of the power consumption reduction.

### (Eighth Embodiment)

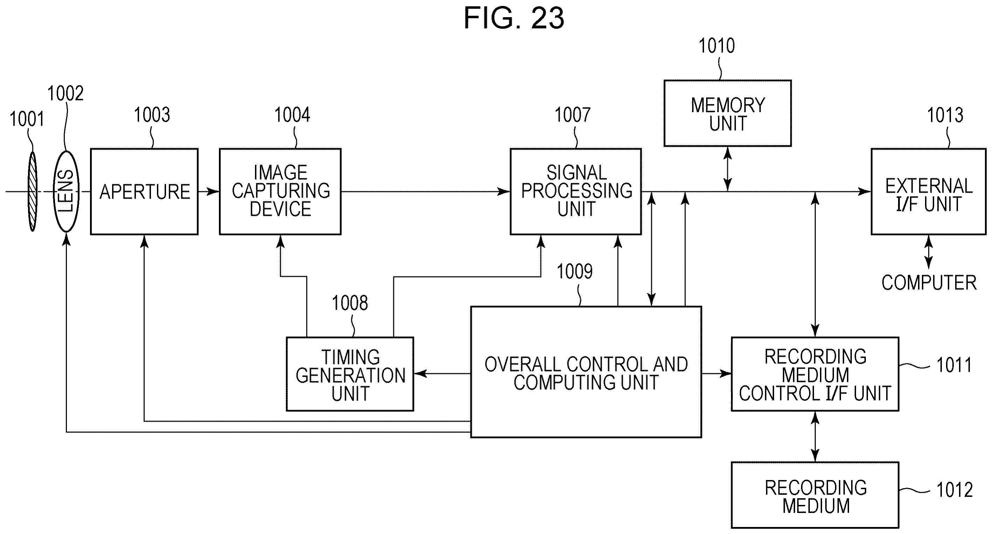

A photoelectric conversion system according to this embodiment will be described by using Fig. 23. Fig. 23 is a block diagram illustrating the schematic configuration of the photoelectric conversion system according to this embodiment.

The photoelectric conversion device described for the embodiment above is applicable to various photoelectric conversion systems. As examples of an applicable photoelectric conversion system, a digital still camera, a digital camcorder, a monitoring camera, a copier, a fax machine, a mobile phone, an onboard camera, an observation satellite, and the like can be cited.

The photoelectric conversion system also includes a camera module including an optical system such as a lens and an image capturing device. Fig. 23 illustrates a block diagram of a digital still camera as an example of these devices.

The photoelectric conversion system illustrated in Fig. 23 has an image capturing device 1004 and a lens 1002, the image capturing device 1004 serving as an example of the photoelectric conversion device, the lens 1002 causing an optical image of a subject to be formed in the image capturing device 1004. The photoelectric conversion system further has an aperture 1003 for making, variable, the quantity of light passing through the lens 1002 and a barrier 1001 for protecting the lens 1002. The lens 1002 and the aperture 1003 are an optical system that condenses light beams into the image capturing device 1004. The image capturing device 1004 is the photoelectric conversion device of any of the embodiments above and converts an optical image formed with the lens 1002 into an electric signal.

The photoelectric conversion system has a signal processing unit 1007 serving as an image generation unit that generates an image by processing an output signal from the image capturing device 1004. The signal processing unit 1007 performs an operation for outputting image data after performing various corrections and compression as necessary. The signal processing unit 1007 may be formed on the semiconductor layer on which the image capturing device 1004 is provided or on a semiconductor layer different from that for the image capturing device 1004. The image capturing device 1004 and the signal processing unit 1007 may be formed on the same semiconductor layer.

The photoelectric conversion system further has a memory unit 1010 for temporarily storing image data and an external interface unit (external I/F unit) 1013 for communicating with an external computer or the like. The photoelectric conversion system further has a recording medium 1012 such as a semiconductor memory for recording or reading out image capturing data and a recording medium control interface unit (recording medium control I/F unit) 1011 for the recording or reading out to and from the recording medium 1012. The recording medium 1012 may be provided inside the photoelectric conversion system or be provided attachably/detachably.

The photoelectric conversion system further has an overall control and computing unit 1009 that performs various arithmetic operations and overall control of the digital still camera, the image capturing device 1004, and a timing generation unit 1008 that outputs timing signals to the signal processing unit 1007. The timing signal or the like may be input from an external device. It suffices that the photoelectric conversion system have at least the image capturing device 1004 and the signal processing unit 1007 that processes an output signal output from the image capturing device 1004.

The image capturing device 1004 outputs an image capturing signal to the signal processing unit 1007. The signal processing unit 1007 performs predetermined signal processing of the image capturing signal output from the image capturing device 1004 and outputs image data. The signal processing unit 1007 generates an image by using the image capturing signal.

According to this embodiment as described above, the photoelectric conversion system to which the photoelectric conversion device (image capturing device) according to any of embodiments above is applied may be implemented.

### (Ninth Embodiment)

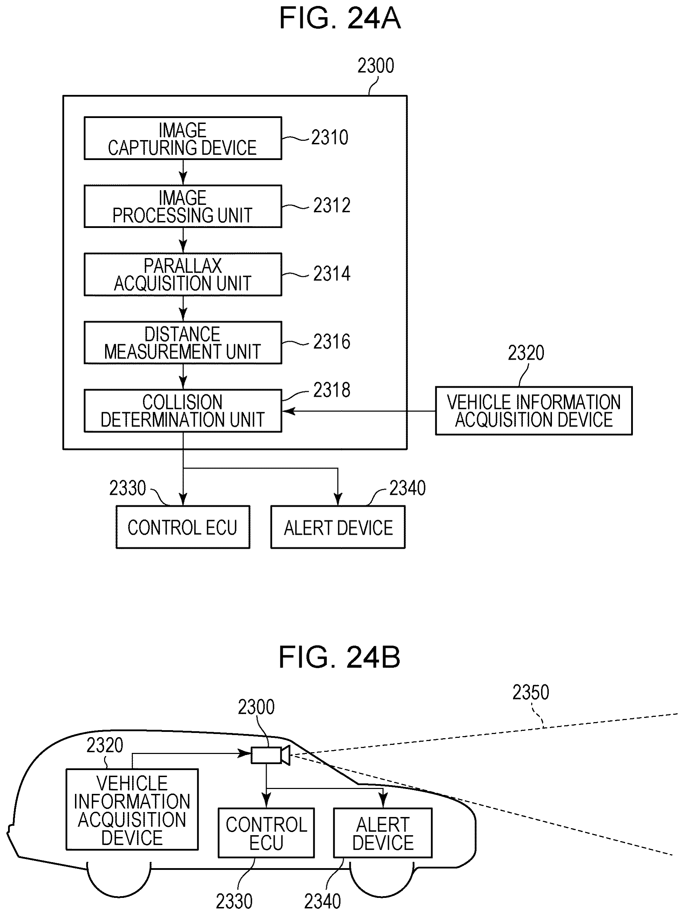

A photoelectric conversion system and a movable body of this embodiment will be described by using Figs. 24A and 24B. Figs. 24A and 24B are charts illustrating the photoelectric conversion system and the movable body of this embodiment.

Fig. 24A illustrates an example of the photoelectric conversion system for an onboard camera. A photoelectric conversion system 2300 has an image capturing device 2310. The image capturing device 2310 is the photoelectric conversion device described in any of the embodiments above. The photoelectric conversion system 2300 has an image processing unit 2312 that performs image processing of a plurality of pieces of image data acquired by the image capturing device 2310. The photoelectric conversion system 2300 also has a parallax acquisition unit 2314 that calculates parallax (a phase difference for a disparity image) from the plurality of image data acquired by the photoelectric conversion system 2300. Further, the photoelectric conversion system 2300 has a distance acquisition unit 2316 that calculates a distance to a target based on the calculated parallax and a collision determination unit 2318 that determines whether there is a collision possibility based on the calculated distance. The parallax acquisition unit 2314 and the distance acquisition unit 2316 are each an example of the distance information acquisition unit that acquires information regarding a distance to a target. The distance information may thus be acquired by using not only the phase difference but also time of flight (ToF) technology. The collision determination unit 2318 may determine the collision possibility by using any of the pieces of distance information. The distance information acquisition unit may be implemented by hardware dedicatedly designed or a software module. The distance information acquisition unit may also be implemented by a field programmable gate array (FPGA), an application specific integrated circuit (ASIC), or the like, or combination of these.

The photoelectric conversion system 2300 is connected to a vehicle information acquisition device 2320 and is capable of acquiring vehicle information such as vehicle speed, a yaw rate, or a rudder angle. In addition, a control ECU 2330 is connected to the photoelectric conversion system 2300. The control ECU 2330 is a control device (control unit) that outputs a control signal causing a braking force to be generated in the vehicle, based on the result of determination by the collision determination unit 2318. The photoelectric conversion system 2300 is also connected to an alert device 2340 that alerts the driver based on the result of the determination by the collision determination unit 2318. For example, if there is a high collision possibility as the result of the determination by the collision determination unit 2318, the control ECU 2330 performs vehicle control to avoid collision and reduce a damage by braking, releasing the accelerator, reducing engine output, or the like.

The alert device 2340 alerts a user, for example, by giving a warning using sound or the like, displaying alert information on the screen of a car navigation system or the like, or vibrating the seat belt or the steering wheel.

In this embodiment, an image of an area around, for example, in front of or behind a vehicle is captured by using the photoelectric conversion system 2300. Fig. 24B illustrates a photoelectric conversion system used in capturing an image of an area in front of the vehicle (an image capturing range 2350). The vehicle information acquisition device 2320 gives an instruction to the photoelectric conversion system 2300 or the image capturing device 2310. According to the configuration as described above, distance measurement accuracy may be improved more.

The example where control is performed to avoid collision against another vehicle has been described above; however, the embodiment is also applicable to control by automatic driving following another vehicle, automatic driving to prevent deviation from a traffic lane, and the like. Further, the photoelectric conversion system is not limited to the vehicle such as a private car and is applicable to, for example, a movable body (moving apparatus) such as a ship, an airplane, or an industrial robot. In addition, the photoelectric conversion system is not limited to the movable body and is applicable to an apparatus that widely uses object recognition, such as an intelligent transport system (ITS).

### (Tenth Embodiment)

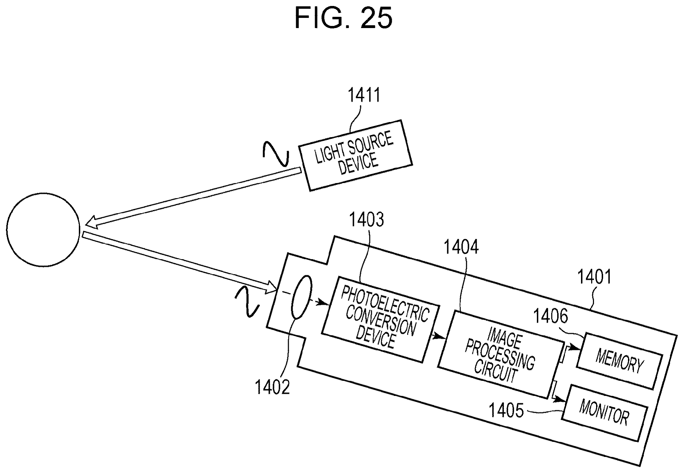

A photoelectric conversion system of this embodiment will be described by using Fig. 25. Fig. 25 is a block diagram illustrating an example configuration of a distance image sensor that is the photoelectric conversion system.

As illustrated in Fig. 25, a distance image sensor 1401 includes an optical system 1402, a photoelectric conversion device 1403, an image processing circuit 1404, a monitor 1405, and a memory 1406. The distance image sensor 1401 is capable of acquiring a distance image according to a distance to a subject by receiving light (modulated light or pulsed light) that is emitted from a light source device 1411 to the subject and that reflects on the surface of the subject.

The optical system 1402 has one or more lenses, guides image light (incident light) from the subject to the photoelectric conversion device 1403, and forms an image on the photosensitive surface (a sensor section) of the photoelectric conversion device 1403.

The photoelectric conversion device described in any of the embodiments described above is applied to the photoelectric conversion device 1403, and a distance signal representing a distance obtained from a light receiving signal output from the photoelectric conversion device 1403 is supplied to the image processing circuit 1404.

The image processing circuit 1404 performs image processing for forming a distance image based on the distance signal supplied from the photoelectric conversion device 1403. The distance image (image data) acquired by the image processing is supplied to and displayed on the monitor 1405 or is supplied to or stored (recorded) in the memory 1406.

With the distance image sensor 1401 configured as described above, pixel characteristics are improved by applying the photoelectric conversion device described above, and thereby, for example, a more accurate distance image may be acquired.

### (Eleventh Embodiment)

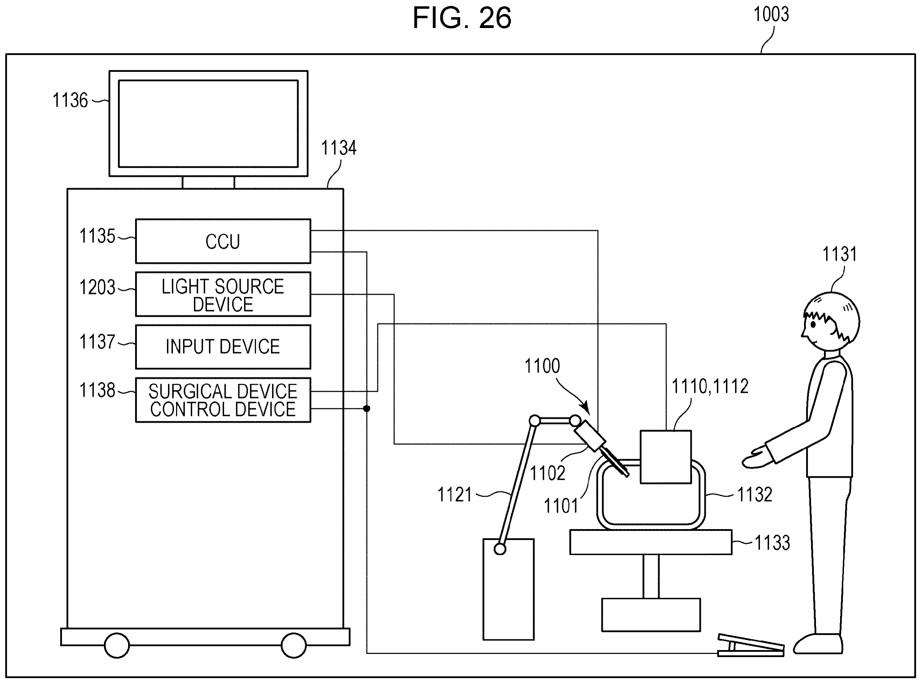

A photoelectric conversion system of this embodiment will be described by using Fig. 26. Fig. 26 is a chart illustrating an example of the schematic configuration of an endoscope surgery system that is a photoelectric conversion system of this embodiment.

Fig. 26 illustrates a state where an operator (doctor) 1131 performs a surgery on a patient 1132 on a patient bed 1133 by using an endoscope surgery system 1103. As illustrated in the figure, the endoscope surgery system 1103 includes an endoscope 1100, a surgical tool 1110, and a cart 1134 equipped with various devices for the endoscopic surgery.

The endoscope 1100 includes a lens barrel 1101 and a camera head 1102. The lens barrel 1101 has a portion of a predetermined length from the distal end of the lens barrel 1101, the portion being inserted into the body cavity of the patient 1132. The camera head 1102 is connected to the proximal end of the lens barrel 1101. The example illustrates the endoscope 1100 having the lens barrel 1101 that is rigid, that is, a so-called rigid endoscope; however, the endoscope 1100 may be a so-called flexible endoscope having a flexible lens barrel.

An aperture portion having an object lens fitted therein is provided in the distal end of the lens barrel 1101. The endoscope 1100 is connected to a light source device 1203. Light generated by the light source device 1203 is guided to the distal end of the lens barrel by a light guide extending inside the lens barrel 1101 and is emitted toward an observation target in the body cavity of the patient 1132 via the object lens. The endoscope 1100 may be a forward-viewing endoscope, an oblique-viewing endoscope, or a side-view endoscope.

An optical system and the photoelectric conversion device are provided in the camera head 1102. The optical system condenses reflected light beams (observation light beams) from the observation target into the photoelectric conversion device. The photoelectric conversion device performs photoelectric conversion on the observation light and generates an electric signal corresponding to the observation light, that is, an image signal corresponding to an observation image. As the photoelectric conversion device, the photoelectric conversion device described in any of the embodiments described above may be used. The image signal is transmitted as raw data to a camera control unit (CCU) 1135.

The CCU 1135 includes a central processing unit (CPU), a graphics processing unit (GPU), and the like and comprehensively controls the operations of the endoscope 1100 and a display device 1136. Further, the CCU 1135 receives an image signal from the camera head 1102 and performs, on the image signal, various types of image processing such as developing (demosaicing) for displaying an image based on the image signal.

Under the control of the CCU 1135, the display device 1136 displays an image based on the image signal having undergone the image processing by the CCU 1135.

The light source device 1203 includes a light source such as a light emitting diode (LED) and supplies emitted light to the endoscope 1100, the emitted light being used in taking an image of a part or the like to undergo surgery.

An input device 1137 is an input interface for the endoscope surgery system 1103. A user may input various pieces of information and instructions to the endoscope surgery system 1103 with the input device 1137.

A surgical device control device 1138 controls the driving of an energy-based surgical device 1112 for tissue cauterization, incision, blood vessel sealing, and the like.

The light source device 1203 that supplies emitted light to the endoscope 1100 in taking an image of the part to undergo surgery may include, for example, a white light source including an LED, a laser light source, or combination of these. If the white light source is formed by combining a RGB laser light source with the white light source, output strength and output timing of colors (wavelengths) may be controlled with high accuracy, and thus the white balance of the captured image may be adjusted at the light source device 1203. In this case, images for RGB may be captured with time division in such a manner that laser light beams from the RGB laser light sources are emitted to the observation target with time division and that the driving of an imaging element of the camera head 1102 is controlled in synchronization with the emission timing. According to the method, a color image may be acquired without providing the imaging element with a color filter.

The driving of the light source device 1203 may also be controlled to change the strength to output light at predetermined time intervals. The driving of the imaging element of the camera head 1102 is controlled in synchronization with the timing of changing the strength of the light, images are acquired with time division, and the images are combined. An image with a high dynamic range without what is called a black crush and a blown-out highlight may thereby be generated.

The light source device 1203 may be formed to be able to supply light in a predetermined wavelength band supporting special light observation. In the special light observation, for example, wavelength dependency on light absorption in the body tissue is utilized. Specifically, light in a band narrower than the band of light (that is, white light) emitted at the time of ordinary observation is emitted, and thereby an image of a predetermined tissue such as a blood vessel in the mucosal surface is taken with high contrast.

Alternatively, fluorescence observation may be performed in the special light observation in which an image is acquired by using fluorescence generated by emitting excitation light. In the fluorescence observation, for example, fluorescence from the body tissue after emitting excitation light onto a body tissue may be observed, and a fluorescence image may be acquired in such a manner that a reagent such as indocyanine green (ICG) is injected locally into the body tissue and that excitation light appropriate for the fluorescence wavelength of the reagent is emitted onto the body tissue. The light source device 1203 may be formed to be able to supply narrowband light and/or excitation light supporting the special light observation.

### (Twelfth Embodiment)

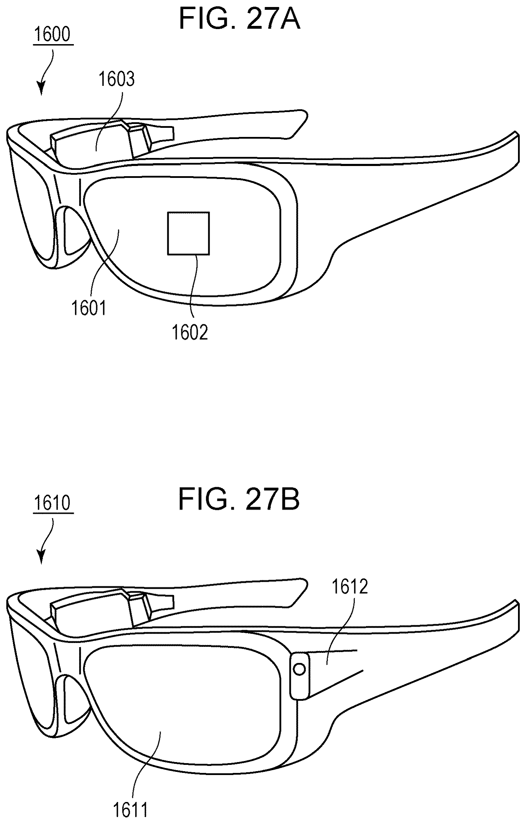

A photoelectric conversion system of this embodiment will be described by using Figs. 27A and 27B. Fig. 27A is a chart illustrating an example configuration of glasses 1600 (smart glasses) that are the photoelectric conversion system.

The glasses 1600 have photoelectric conversion devices 1602. Each photoelectric conversion device 1602 is a photoelectric conversion device described in a twelfth embodiment. A display device including a light emitting device such as an OLED or a LED may be provided on the back side of each of lenses 1601. The photoelectric conversion device 1602 the number of which is one or more may be provided. A plurality of types of photoelectric conversion devices may be combined and used. The arrangement position of the photoelectric conversion device 1602 is not limited to that in Fig. 27A.

The glasses 1600 further include control devices 1603. Each control device 1603 functions as a power source that supplies power to the photoelectric conversion device 1602 and the display device described above. The control device 1603 controls the operations of the photoelectric conversion device 1602 and the display device. Each lens 1601 has an optical system for condensing light beams into the photoelectric conversion device 1602.

Fig. 27B is provided to explain glasses 1610 (smart glasses) according to an application example. The glasses 1610 have control devices 1612, and each control device 1612 is equipped with a display device and a photoelectric conversion device corresponding to the photoelectric conversion device 1602. Lenses 1611 each have the photoelectric conversion device in the control device 1612 and an optical system for projecting light emitted from the display device, and an image is projected onto a corresponding one of the lenses 1611. The control device 1612 functions as a power source that supplies power to the photoelectric conversion device and the display device and controls the operations of the photoelectric conversion device and the display device. The control device may have a sight line detection unit that detects the line of sight of a person wearing the glasses 1610. To detect the sight line, infrared rays may be used. Infrared emitting units each emit the infrared light onto a corresponding one of the eyeballs of a user watching a displayed image. Reflected light of the emitted infrared light reflected from the eyeball is detected by an image capturing unit having the light receiving element, and thereby a captured image of the eyeball is acquired. Inclusion of reducing means for reducing light from the infrared emitting unit in plan view to the display unit leads to reduction in image quality deterioration.

The sight line of the user to the displayed image is detected from the captured images of the eyeballs acquired by image capturing with the infrared light. Any publicly known method is applicable to the sight line detection using the captured images of the eyeballs. For example, a sight line detection method based on Purkinje images caused by reflection of emitted light on the corneas may be used.

More specifically, sight line detection processing based on the pupil-corneal reflection method is performed. Sight line vectors representing the directions of the eyeballs (rotation angle) are calculated based on the pupil images included in the captured images of the eyeballs and the Purkinje images by using the pupil-corneal reflection method, and thereby the sight line of the user is detected.

The display device of this embodiment has the photoelectric conversion device having the light receiving element, and a displayed image on the display device may be controlled based on information regarding the sight line of the user from the photoelectric conversion device.

Specifically, in the display device, a first visibility area where the user watches and a second visibility area other than the first visibility area are decided based on the sight line information. The first visibility area and the second visibility area may be decided by the control device of the display device, or a first visibility area and a second visibility area decided by an external control device may be received. For a display area of the display device, control may be performed to set the display resolutions of the first visibility area to be higher than the display resolution of the second visibility area. The resolutions of the second visibility area may thus be set lower than those of the first visibility area.

The display area may also have a first display area and a second display area different from the first display area, and a higher priority area may be decided from the first display area and the second display area based on the sight line information. The first visibility area and the second visibility area may be decided by the control device of the display device, or a first visibility area and a second visibility area decided by an external control device may be received. Control may be performed to set the resolutions of the higher priority area to be higher than the resolutions of an area other than the higher priority area. The resolutions of the lower priority area may thus be set lower.

To decide the first visibility area and the higher priority area, AI may be used. AI may be a model configured to estimate, from images of the eyeballs, the angle of the sight line and a distance to an object in the line of sight by using, as training data, the images of the eyeballs and directions of actual view by the eyeballs in the eyeball images. An AI program may be held by the display device, the photoelectric conversion device, or the external apparatus. If the external apparatus has the AI program, the AI program is transferred to the display device through communications.

If the display control is performed based on recognition detection, this embodiment is preferably applicable to smart glasses further having photoelectric conversion devices that capture images of areas outside the glasses. The smart glasses are capable of displaying external information regarding the captured images in real-time.

The embodiments described above may be appropriately modified without departing from the technical spirit thereof. The embodiments of the present invention also include an example in which the configuration of part of the embodiments is added to or replaced with another one of the embodiments.

The disclosure of these embodiments includes the following configurations and method.

### (Configuration 1)

A photoelectric conversion device includes: a photoelectric conversion unit that generates a photon detection signal by using avalanche multiplication; a counter circuit that counts the photon detection signal output from the photoelectric conversion unit; a first period included in one frame; and a second period that is included in the one frame, that follows the first period, and that does not overlap with the first period. A count value based on one photon detection signal by the counter circuit in the first period is greater than a count value based on the one photon detection signal by the counter circuit in the second period.

### (Configuration 2)

In the photoelectric conversion device according to Configuration 1, in response to the photoelectric conversion unit outputting the photon detection signal in the first period, a natural number N is added to the counter circuit, in response to the photoelectric conversion unit outputting the photon detection signal in the second period, a natural number M is added to the counter circuit, and the natural number N is greater than the natural number M.

### (Configuration 3)

In the photoelectric conversion device according to Configuration 2, the natural number M is 1.

### (Configuration 4)

In the photoelectric conversion device according to any one of Configurations 1 to 3, the first period is temporally contiguous with the second period.

### (Configuration 5)

In the photoelectric conversion device according to any one of Configurations 1 to 4, a clock signal is input, the clock signal causing the photoelectric conversion unit to be recharged and to enter a standby state.

### (Configuration 6)

In the photoelectric conversion device according to Configuration 5, the first period and the second period come after the clock signal is input.

### (Configuration 7)

In the photoelectric conversion device according to any one of Configurations 1 to 6, a duration of the first period is shorter than a duration of the second period.

### (Configuration 8)

In the photoelectric conversion device according to Configuration 2, in response to the photoelectric conversion unit outputting the photon detection signal in a third period, a natural number L is added to the counter circuit, and the natural number L is less than the natural number M.

### (Configuration 9)

In the photoelectric conversion device according to Configuration 2, a value based on a photon detection result in a preceding recharging cycle is added.

### (Configuration 10)

In the photoelectric conversion device according to Configuration 2, a value based on a result of detecting a neighboring pixel is added.

### (Configuration 11)

In the photoelectric conversion device according to Configuration 2, in response to a photon being detected in the first period but not being detected in the second period, the natural number M is not added to the counter circuit.

### (Configuration 12)

In the photoelectric conversion device according to any one of Configurations 1 to 11, up to one photon is detected in each of the first period and the second period.

### (Configuration 13)

In the photoelectric conversion device according to Configuration 2, the natural number N or the natural number M is set based on a count value of the counter circuit.

### (Configuration 14)

In the photoelectric conversion device according to any one of Configurations 1 to 13, the duration of the first period and the duration of the second period are set based on a count value of the counter circuit.

### (Configuration 15)

In the photoelectric conversion device according to Configuration 2, combination of a duration of the first period and a duration of the second period or combination of the natural number N and the natural number M is set different between a kth frame and a (k+1)th frame.

### (Configuration 16)

In the photoelectric conversion device according to Configuration 2, the photoelectric conversion unit has a pixel array in which a plurality of pixels are arranged in a plurality of columns and a plurality of rows, the pixel array has a first pixel group and a second pixel group, and combination of a duration of the first period and a duration of the second period or combination of the natural number N and the natural number M is different between the first pixel group and the second pixel group.

### (Configuration 17)

A photoelectric conversion system includes: the photoelectric conversion device according to any one of Configurations 1 to 16; and a signal processing unit that generates an image by using a signal output by the photoelectric conversion device.

### (Configuration 18)

In the photoelectric conversion system according to Configuration 17, nonlinearity correction is performed.

### (Configuration 19)

A movable body including the photoelectric conversion device according to any one of Configurations 1 to 16 includes: a control unit that performs control of moving of the movable body by using a signal output by the photoelectric conversion device.

While the present invention has described exemplary embodiments, it is to be understood that some embodiments are not limited to the disclosed exemplary embodiments. The scope of the following claims is to be accorded the broadest interpretation so as to encompass all such modifications and equivalent structures and functions.

This application claims the benefit of Japanese Patent Application No. 2023-108682 filed June 30, 2023 and Japanese Patent Application No. 2024-102829 filed June 26, 2024, which are hereby incorporated by reference herein in their entirety.

### Reference Signs List

- 301: avalanche photodiode
- 302: quenching element
- 303: waveform shaping circuit
- 305: counter circuit
- 311: control circuit

## Claims

1. A photoelectric conversion device comprising:
a photoelectric conversion unit that generates a photon detection signal by using avalanche multiplication;
a counter circuit that counts the photon detection signal output from the photoelectric conversion unit;
a first period included in one frame; and
a second period that is included in the one frame, that follows the first period, and that does not overlap with the first period,
wherein a count value based on one photon detection signal by the counter circuit in the first period is
greater than a count value based on the one photon detection signal by the counter circuit in the second period.

2. The photoelectric conversion device according to claim 1,
wherein in response to the photoelectric conversion unit outputting the photon detection signal in the first period, a natural number N is added to the counter circuit,
wherein in response to the photoelectric conversion unit outputting the photon detection signal in the second period, a natural number M is added to the counter circuit, and
wherein the natural number N is greater than the natural number M.

3. The photoelectric conversion device according to claim 2,
wherein the natural number M is 1.

4. The photoelectric conversion device according to claim 1,
wherein the first period is temporally contiguous with the second period.

5. The photoelectric conversion device according to claim 1,
wherein a clock signal is input, the clock signal causing the photoelectric conversion unit to be recharged and to enter a standby state.

6. The photoelectric conversion device according to claim 5,
wherein the first period and the second period come after the clock signal is input.

7. The photoelectric conversion device according to claim 1,
wherein a duration of the first period is shorter than a duration of the second period.

8. The photoelectric conversion device according to claim 2,
wherein in response to the photoelectric conversion unit outputting the photon detection signal in a third period, a natural number L is added to the counter circuit, and
wherein the natural number L is less than the natural number M.

9. The photoelectric conversion device according to claim 2,
wherein a value based on a photon detection result in a preceding recharging cycle is added.

10. The photoelectric conversion device according to claim 2,
wherein a value based on a result of detecting a neighboring pixel is added.

11. The photoelectric conversion device according to claim 2,
wherein in response to a photon being detected in the first period but not being detected in the second period, the natural number M is not added to the counter circuit.

12. The photoelectric conversion device according to claim 1,
wherein up to one photon is detected in each of the first period and the second period.

13. The photoelectric conversion device according to claim 2,
wherein the natural number N or the natural number M is set based on a count value of the counter circuit.

14. The photoelectric conversion device according to claim 1,
wherein a duration of the first period and a duration of the second period are set based on a count value of the counter circuit.

15. The photoelectric conversion device according to claim 2,
wherein combination of a duration of the first period and a duration of the second period or combination of the natural number N and the natural number M is set different between a kth frame and a (k+1)th frame.

16. The photoelectric conversion device according to claim 2,
wherein the photoelectric conversion unit has a pixel array in which a plurality of pixels are arranged in a plurality of columns and a plurality of rows,
wherein the pixel array has a first pixel group and a second pixel group, and
wherein combination of a duration of the first period and a duration of the second period or combination of the natural number N and the natural number M is different between the first pixel group and the second pixel group.

17. A photoelectric conversion system comprising:
The photoelectric conversion device according to any one of claims 1 to 16; and
a signal processing unit that generates an image by using a signal output by the photoelectric conversion device.

18. The photoelectric conversion system according to claim 17, wherein nonlinearity correction is performed.

19. A movable body including the photoelectric conversion device according to any one of claims 1 to 16, comprising:
a control unit that performs control of moving of the movable body by using a signal output by the photoelectric conversion device.
